(19) Europäisches Patentamt
European Patent Office
Office européen des brevets

(11) EP 2 692 919 A2

(12) # EUROPEAN PATENT APPLICATION
published in accordance with Art. 153(4) EPC

(43) Date of publication:
**05.02.2014 Bulletin 2014/06**

(21) Application number: **12763036.6**

(22) Date of filing: **30.03.2012**

(51) Int Cl.:
*D03D 1/02* (2006.01) *D03D 15/00* (2006.01)
*B60R 21/16* (2006.01) *D06M 11/77* (2006.01)

(86) International application number:
**PCT/KR2012/002396**

(87) International publication number:
**WO 2012/134227 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011 KR 20110029869**
**31.03.2011 KR 20110029870**

(71) Applicant: **Kolon Industries, Inc.**
**Gwacheon-si, Gyeonggi-do 427-709 (KR)**

(72) Inventors:
- **KIM, Jae-Hyung**
**Gumi-si**
**Gyeongbuk 730-796 (KR)**
- **KWAK, Dong-Jin**
**Gumi-si**
**Gyeongbuk 730-819 (KR)**
- **LEE, Sang-Mok**
**Gumi-si**
**Gyeongbuk 730-020 (KR)**

(74) Representative: **Ter Meer Steinmeister & Partner**
**Patentanwälte**
**Mauerkircherstrasse 45**
**81679 München (DE)**

(54) **POLYESTER FABRIC AND METHOD FOR MANUFACTURING SAME**

(57) The present invention relates to a fabric for an airbag, and a production method thereof. More particularly, the present invention relates to a polyester fabric which includes a high-strength, high-elongation and low-modulus polyester yarn to show excellent toughness and energy absorbing performance after high-humidity heat treatment for a long period of time, a production method thereof, and an airbag for an automobile including the same.

The polyester fabric includes a polyester yarn having a fineness of 300 to 700 denier to optimize and maintain the tear strength and seam strength indices in the warp and weft directions within the predetermined range under high temperature and high humidity for a long time, thereby minimizing the impact applied to a passenger and protecting the passenger with safety.

[FIG. 5]

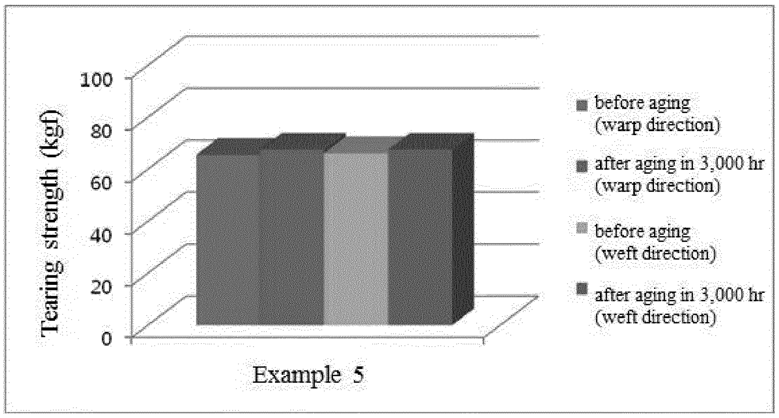


EP 2 692 919 A2

## Description

[Technical Field]

The present invention relates to a fabric for an airbag, and a production method thereof. More particularly, the present invention relates to a polyester fabric which includes a high-strength, high-elongation and low-modulus polyester yarn to show excellent toughness and energy absorbing performance after heat treatment at high temperature and high humidity for a long period of time, a production method thereof, and an airbag for an automobile including the same.

[Background Art]

Generally, an airbag is a device for protecting a driver and passengers, in which a crash impact is detected by an impact detecting sensor when driving vehicles collide head-on at a speed of about 40 km/h or higher, and consequently, gunpowder explodes to supply gas into an airbag cushion to inflate the airbag.
A fabric for an airbag is required to have low air permeability for deploying at the time of collision, high strength for preventing it from being damaged and ruptured, high heat resistance, high flexibility for decreasing an impact applied to an occupant, or the like.
Particularly, an airbag used for automobiles is configured such that it is mounted in a handle, a windowpane, or a side structure of an automobile in a state in which it is folded in order to minimize its volume, and then it is expanded and deployed when an inflator or the like is operated.
Therefore, in order to effectively maintain the folding and packaging properties of an airbag at the time of mounting the airbag in an automobile, to prevent an airbag from being damaged and ruptured, to exhibit excellent airbag cushion deploying performance, and to minimize the impact applied to a passenger, it is important for a fabric for an airbag to have excellent mechanical properties, excellent foldability and high flexibility for decreasing the impact applied to a passenger. However, a fabric for an airbag, which maintains an excellent air blocking effect and flexibility for passenger's safety, and also can sufficiently endure the impact applied to an airbag, and can be effectively mounted in an automobile, has not been proposed yet.
Conventionally, a polyamide fiber such as nylon 66 or the like has been used as the raw material of the yarn for an airbag. However, although nylon 66 has superior impact resistance, it has drawbacks of being inferior to a polyester fiber in terms of moisture- and heat-resistance, light-resistance, and shape stability, and being expensive.
Meanwhile, Japanese patent publication No. Hei 04-214437 suggested the use of a polyester fiber for reducing such defects. However, when the airbag is manufactured by using the prior polyester yarn, it is difficult to put the airbag into a narrow space in an automobile because of high stiffness, the airbag is excessively thermally-constricted during high-temperature heat treatment because of high elasticity and low elongation, and it is difficult for the airbag to maintain sufficient mechanical properties and deploying performance under severe conditions of high temperature.
Therefore, it is required to develop a fabric for an airbag, which maintains excellent mechanical properties and air blocking effects to be suitable for a fabric for an automobile airbag, has flexibility for reducing the impact applied to a passenger, and storability, and maintains excellent mechanical properties under severe conditions of high temperature and high humidity for a long period of time, because the airbag cushion is stored in an automobile for a long time.

[Disclo sure]

[Technical Problem]

An object of the present invention is to provide a polyester fabric which has excellent mechanical properties, flexibility, and storability to be used for a fabric for an airbag, and which can maintain sufficient performance under severe conditions of high temperature and high humidity for a long time.
Another object of the present invention is to provide a method for producing the polyester fabric.
Still another object of the present invention is to provide an airbag for an automobile including the polyester fabric.

[Technical Solution]

The present invention provides a polyester fabric, which includes a polyester yarn having a fineness of 300 to 700 denier, and has 0.8 or more of a $PTSRI^{wa}$ index in the warp direction of the fabric as shown in the following Equation 1, 0.8 or more of a $PTSRI^{we}$ index in the weft direction of the fabric as shown in the following Equation 2, 0.8 or more of a $PSSRI^{wa}$ index in the warp direction of the fabric as shown in the following Equation 3, and 0.8 or more of a $PSSRI^{we}$ index in the weft direction of the fabric as shown in the following Equation 4.

[Equation 1]

$$PTSRI^{wa} = PTS_{3000}{}^{wa}/PTS^{wa}$$

[Equation 2]

$$PTSRI^{we} = PTS_{3000}{}^{we}/PTS^{we}$$

[Equation 3]

$$PSSRI^{wa} = PSS_{3000}{}^{wa}/PSS^{wa}$$

[Equation 4]

$$PSSRI^{we} = PSS_{3000}{}^{we}/PSS^{we}$$

wherein $PTSRI^{wa}$ and $PTSRI^{we}$ represent a polyester tearing strength retention index (PTSRI) in the warp and weft directions of the fabric, which is measured after heat treatment at 110°C for 3,000 hours in accordance with Autoliv's test standard E668992 for a fabric for an airbag, respectively,

$PSSRI^{wa}$ and $PSSRI^{we}$ represent a polyester seam strength retention index (PSSRI) in the warp and weft directions of the fabric, which is measured after heat treatment at 110°C for 3,000 hours in accordance with Autoliv's test standard E668992 for a fabric for an airbag, respectively,

$PTS^{wa}$ and $PTS^{we}$ represent a polyester tear strength (kgf) in the warp and weft directions of the fabric, which is measured at room temperature in accordance with Autoliv's test standard E668992 for a fabric for an airbag, respectively,

$PTS_{3000}{}^{wa}$ and $PTS_{3000}{}^{we}$ represent a polyester tear strength (kgf) in the warp and weft directions of the fabric, which is measured after heat treatment at 110°C for 3,000 hours in accordance with Autoliv's test standard E668992 for a fabric for an airbag, respectively,

$PSS^{wa}$ and $PSS^{we}$ represent a polyester seam strength (N) in the warp and weft directions of the fabric, which is measured at room temperature in accordance with Autoliv's test standard E668992 for a fabric for an airbag, respectively, and

$PSS_{3000}{}^{wa}$ and $PSS_{3000}{}^{we}$ represent a polyester seam strength (N) in the warp and weft directions of the fabric, which is measured after heat treatment at 110°C for 3,000 hours in accordance with Autoliv's test standard E668992 for a fabric for an airbag, respectively.

Further, the present invention provides a polyester fabric, which includes a polyester yarn having a fineness of 300 to 700 denier, and has 0.83 or more of a $PWTSRI^{Wa}$ index in the warp direction of the fabric as shown in the following Equation 5, 0.83 or more of a $PWTSRI^{We}$ index in the weft direction of the fabric as shown in the following Equation 6, 0.83 or more of a $PWSSRI^{wa}$ index in the warp direction of the fabric as shown in the following Equation 7, and 0.83 or more of a $PWSSRI^{we}$ index in the weft direction of the fabric as shown in the following Equation 8.

[Equation 5]

$$PWTSRI^{wa} = PWTS_{3000}{}^{wa}/PWTS^{wa}$$

[Equation 6]

$$PWTSRI^{we} = PWTS_{3000}{}^{we}/PWTS^{we}$$

[Equation 7]

$$PWSSRI^{wa} = PWSS_{3000}{}^{wa}/PWSS^{wa}$$

[Equation 8]

$$PWSSRI^{we} = PWSS_{3000}{}^{we}/PWSS^{we}$$

wherein $PWTSRI^{Wa}$ and $PWTSRI^{we}$ represent a polyester tearing strength retention index (PWTSRI) in the warp and weft directions of the fabric, which is measured after heat treatment under the conditions of 65°C and 95% RH for 3,000 hours in accordance with Autoliv's test standard E668992 for a fabric for an airbag, respectively,

$PWSSRI^{wa}$ and $PWSSRI^{we}$ represent a polyester seam strength retention index (PWSSRI) in the warp and weft directions of the fabric, which is measured after heat treatment under the conditions of 65°C and 95% RH for 3,000 hours in accordance with Autoliv's test standard E668992 for a fabric for an airbag, respectively,

$PWTS^{wa}$ and $PWTS^{we}$ represent a polyester tear strength (kgf) in the warp and weft directions of the fabric, which is measured at room temperature in accordance with Autoliv's test standard E668992 for a fabric for an airbag, respectively,

$PWTS_{3000}{}^{wa}$ and $PWTS_{3000}{}^{we}$ represent a polyester tear strength (kgf) in the warp and weft directions of the fabric, which is measured after heat treatment under the conditions of 65°C and 95% RH for 3,000 hours in accordance with Autoliv's test standard E668992 for a fabric for an airbag, respectively,

$PWSS^{wa}$ and $PWSS^{we}$ represent a polyester seam strength (N) in the warp and weft directions of the fabric, which is measured at room temperature in accordance with Autoliv's test standard E668992 for a fabric for an airbag, respectively, and

$PWSS_{3000}{}^{wa}$ and $PWSS_{3000}{}^{we}$ represent a polyester seam strength (N) in the warp and weft directions of the fabric, which is measured after heat treatment under the conditions of 65°C and 95% RH for 3,000 hours in accordance with Autoliv's test standard E668992 for a fabric for an airbag, respectively.

Further, the present invention provides a method for producing the polyester fabric for an airbag, including the steps of: weaving a polyester yarn having the fineness from 300 to 700 denier to form a grey cloth for an airbag; scouring the woven grey fabric for an airbag; and tentering the scoured cloth.

Furthermore, the preset invention provides an airbag for an automobile, including the polyester fabric for an airbag.

[Best Mode]

Hereinafter, a polyester fabric, a production method thereof, and an airbag for an automobile including the same according to specific embodiments of the present invention will be described in more detail. However, these are set forth to illustrate the present invention, and the scope of the present invention is not limited thereto. It will be obvious to those skilled in the art that various modifications and changes are possible within the scope of the present invention.

Additionally, as long as not particularly described in the entire specification, "includes" or "contains" means to include any component (or constituent) without particular limitation, and the addition of another component (or constituent) is not excluded.

In the present invention, the term "fabric for an airbag" refers to a fabric or non-woven fabric used in the production of an airbag for an automobile. The fabric for an airbag used in common include a plain woven fabric of Nylon 66 which is woven with a Rapier loom or an air jet loom, or a nonwoven fabric of Nylon 66. However, a polyester yarn is used in the fabric for an airbag of the present invention, and thus it has the characteristics of being excellent in basic properties, such as shape stability, toughness, air permeability, stiffness or the like.

However, in order to use a polyester yarn as a yarn for an airbag instead of a polyamide fiber such as nylon 66 or the like, it is required to overcome the problems that the foldability of the polyester yarn is deteriorated due to the high modulus and stiffness thereof, the physical properties of the polyester yarn are deteriorated under heat treatment conditions of high temperature and high humidity for a long time due to the low melt heat capacity, and the deploying performance is deteriorated thereby.

Compared with Nylon, the polyester exhibits higher stiffness pertaining to its specific molecular structure and thus features high modulus. Hence, the use of the polyester yarn in the fabric for an airbag which is folded into a vehicle leads to drastic deterioration of the packing property. Further, the carboxyl end group (hereinafter, referred to as "CEG") in the polyester molecular chain attacks an ester bond under high-temperature and high-humidity conditions to break the molecular chain apart, deteriorating the properties with the progress of aging.

Therefore, the present invention can improve physical properties of the fabric for an airbag by using a high-strength, high-elongation, low-modulus polyester yarn to optimize its physical properties, such as fineness of the yarn and tear strength and seam strength of the fabric, thereby remarkably lowering the stiffness and maintaining good mechanical properties and air sealing performance.

From the results of a series of experiments, the present inventors have found it out that when a polyester fabric

having defined characteristics is used to manufacture an airbag cushion, foldability, shape stability, and air sealing effect can be enhanced, and therefore excellent packing property are maintained when it is used as the fabric for an airbag and packed into a vehicle, excellent mechanical properties, air blocking effects, airtightness or the like can be also maintained under severe conditions of high temperature and high humidity.

According to one embodiment of the present invention, a polyester fabric having defined characteristics is provided. This polyester fabric, namely, the polyester fabric for an airbag may include a polyester yarn having the fineness from 300 to 700 denier, and may have 0.8 or more of a $PTSRI^{wa}$ index in the warp direction of the fabric as shown in the following Equation 1, 0.8 or more of a $PTSRI^{we}$ index in the weft direction of the fabric as shown in the following Equation 2, 0.8 or more of a $PSSRI^{wa}$ index in the warp direction of the fabric as shown in the following Equation 3, and 0.8 or more of a $PSSRI^{we}$ index in the weft direction of the fabric as shown in the following Equation 4.

[Equation 1]

$$PTSRI^{wa} = PTS_{3000}{}^{wa}/PTS^{wa}$$

[Equation 2]

$$PTSRI^{we} = PTS_{3000}{}^{we}/PTS^{we}$$

[Equation 3]

$$PSSRI^{wa} = PSS_{3000}{}^{wa}/PSS^{wa}$$

[Equation 4]

$$PSSRI^{we} = PSS_{3000}{}^{we}/PSS^{we}$$

wherein $PTSRI^{wa}$ and $PTSRI^{we}$ represent a polyester tearing strength retention index (PTSRI) in the warp and weft directions of the fabric, which is measured after heat treatment at 110°C for 3,000 hours in accordance with Autoliv's test standard E668992 for a fabric for an airbag, respectively,

$PSSRI^{wa}$ and $PSSRI^{we}$ represent a polyester seam strength retention index (PSSRI) in the warp and weft directions of the fabric, which is measured after heat treatment at 110°C for 3,000 hours in accordance with Autoliv's test standard E668992 for a fabric for an airbag, respectively,

$PTS^{wa}$ and $PTS^{we}$ represent a polyester tear strength (kgf) in the warp and weft directions of the fabric, which is measured at room temperature in accordance with Autoliv's test standard E668992 for a fabric for an airbag, respectively,

$PTS_{3000}{}^{wa}$ and $PTS_{3000}{}^{we}$ represent a polyester tear strength (kgf) in the warp and weft directions of the fabric, which is measured after heat treatment at 110°C for 3,000 hours in accordance with Autoliv's test standard E668992 for a fabric for an airbag, respectively,

$PSS^{wa}$ and $PSS^{we}$ represent a polyester seam strength (N) in the warp and weft directions of the fabric, which is measured at room temperature in accordance with Autoliv's test standard E668992 for a fabric for an airbag, respectively, and

$PSS_{3000}{}^{wa}$ and $PSS_{3000}{}^{we}$ represent a polyester seam strength (N) in the warp and weft directions of the fabric, which is measured after heat treatment at 110°C for 3,000 hours in accordance with Autoliv's test standard E668992 for a fabric for an airbag, respectively.

Further, the polyester fabric of the present invention may have 0.83 or more of a $PWTSRI^{Wa}$ index in the warp direction of the fabric as shown in the following Equation 5, 0.83 or more of a $PWTSRI^{we}$ index in the weft direction of the fabric as shown in the following Equation 6, 0.83 or more of a $PWSSRI^{wa}$ index in the warp direction of the fabric as shown in the following Equation 7, and 0.83 or more of a $PWSSRI^{we}$ index in the weft direction of the fabric as shown in the following Equation 8.

[Equation 5]

$$PWTSRI^{wa} = PWTS_{3000}{}^{wa}/PWTS^{wa}$$

[Equation 6]

$$PWTSRI^{we} = PWTS_{3000}{}^{we}/PWTS^{we}$$

[Equation 7]

$$PWSSRI^{wa} = PWSS_{3000}{}^{wa}/PWSS^{wa}$$

[Equation 8]

$$PWSSRI^{we} = PWSS_{3000}{}^{we}/PWSS^{we}$$

wherein $PWTSRI^{Wa}$ and $PWTSRI^{we}$ represent a polyester tearing strength retention index (PWTSRI) in the warp and weft directions of the fabric, which is measured after heat treatment under the conditions of 65°C and 95% RH for 3,000 hours in accordance with Autoliv's test standard E668992 for a fabric for an airbag, respectively,

$PWSSRI^{wa}$ and $PWSSRI^{we}$ represent a polyester seam strength retention index (PWSSRI) in the warp and weft directions of the fabric, which is measured after heat treatment under the conditions of 65°C and 95% RH for 3,000 hours in accordance with Autoliv's test standard E668992 for a fabric for an airbag, respectively,

$PWTS^{wa}$ and $PWTS^{we}$ represent a polyester tear strength (kgf) in the warp and weft directions of the fabric, which is measured at room temperature in accordance with Autoliv's test standard E668992 for a fabric for an airbag, respectively,

$PWTS_{3000}{}^{wa}$ and $PWTS_{3000}{}^{we}$ represent a polyester tear strength (kgf) in the warp and weft directions of the fabric, which is measured after heat treatment under the conditions of 65°C and 95% RH for 3,000 hours in accordance with Autoliv's test standard E668992 for a fabric for an airbag, respectively,

$PWSS^{wa}$ and $PWSS^{we}$ represent a polyester seam strength (N) in the warp and weft directions of the fabric, which is measured at room temperature in accordance with Autoliv's test standard E668992 for a fabric for an airbag, respectively, and

$PWSS_{3000}{}^{wa}$ and $PWSS_{3000}{}^{we}$ represent a polyester seam strength (N) in the warp and weft directions of the fabric, which is after heat treatment under the conditions of 65°C and 95% RH for 3,000 hours measured in accordance with Autoliv's test standard E668992 for a fabric for an airbag, respectively.

The experimental results of the present inventors revealed that a polyester yarn having a higher strength, a higher elongation, and a lower modulus than the conventional polyester yarn is used to optimize tear strength and seam strength of the fabric, thereby providing a fabric for an airbag capable of effectively absorbing and enduring the energy of high-temperature and high-pressure gas. Particularly, the fabric may include a polyester yarn having a low fineness and a high strength, and the polyester yarn may have the fineness from 300 to 700 denier.

Particularly, the polyester fabric may have $PTSRI^{wa}$, $PTSRI^{we}$, $PSSRI^{wa}$, and $PSSRI^{we}$ indices of 0.80 or more, preferably 0.82 or more, and more preferably 0.84 or more, which were measured as shown in Equations 1-4 after heat treatment at 110°C for 3,000 hours, and which can be achieved by optimizing the physical properties of the polyester yarn and fabric. The optimization of the physical properties of the yarn and fabric makes it possible to improve toughness and energy absorbing performance of the polyester fabric for an airbag, compared to the conventional PET fabric, to solve the problem of high stiffness, and to provide excellent flexibility and storability.

Further, the polyester fabric may have $PWTSRI^{wa}$ $PWTSRI^{we}$, $PWSSRI^{wa}$, and $PWSSRI^{we}$ indices of 0.83 or more, preferably 0.85 or more, and more preferably 0.87 or more, which were measured as shown in Equations 5-8 under the conditions of 65°C and 95% RH for 3,000 hours, and which can be achieved by optimizing the physical properties of the polyester yarn and fabric. The optimization of the physical properties of the yarn and fabric makes it possible to improve toughness and energy absorbing performance of the polyester fabric for an airbag, compared to the conventional PET fabric, to solve the problem of high stiffness, and to provide excellent flexibility and storability.

For effective absorption of impact energy instantaneously generated upon airbag deployment, the present invention controls fineness, tear strength and seam strength of the yarn constituting the fabric in an optimum range at the same time, thereby enhancing the mechanical properties and foldability of the final woven fabric. It is necessary to

optimize both tear strength and seam strength, in order for the fabric to safely absorb the impact energy of the gas instantaneously ejected upon explosion of chemicals in the airbag at the early stage, and to get unfolded with ease and to secure good foldability. In this regard, the tear strength and seam strength of the fabric of the present invention are required to satisfy the tear strength retention indices and the seam strength retention indices within the above-defined ranges.

Particularly, the tear strength of the fabric, $PTS^{wa}$, $PTS^{we}$, $PTS_{3000}{}^{wa}$, and $PTS_{3000}{}^{we}$ expressed by Equations 1 and 2, namely, the tear strength of the fabric measured at room temperature before heat treatment and after heat treatment at 110°C for 3,000 hours may be 20 kgf or more, or 20 to 90 kgf, preferably 22 kgf or more, or 22 to 88 kgf, more preferably 25 kgf or more, or 25 to 85 kgf, and much more preferably 27 kgf or more, or 27 to 83 kgf, respectively. Further, the seam strength of the fabric, $PSS^{wa}$, $PSS^{we}$, $PSS_{3000}{}^{wa}$, and $PSS_{3000}{}^{we}$ expressed by Equations 3 and 4, namely, the seam strength of the fabric measured at room temperature before heat treatment and after heat treatment at 110°C for 3,000 hours may be 670 N or more, or 670 N to 1650 N, preferably 690 N or more, or 690 N to 1600 N, more preferably 700 N or more, or 700 N to 1,600 N, and much more preferably 750 N or more, or 750 N to 1,500 N, respectively.

Further, the tear strength of the fabric, $PWTS^{wa}$, $PWTS^{we}$, $PWTS_{3000}{}^{wa}$, and $PWTS_{3000}{}^{we}$ expressed by Equations 5 and 6, namely, the tear strength of the fabric measured at room temperature before heat treatment and after heat treatment under the conditions of 65°C and 95% RH for 3,000 hours may be 20 kgf or more, or 20 to 90 kgf, preferably 22 kgf or more, or 22 to 88 kgf, more preferably 25 kgf or more, or 25 to 85 kgf, and much more preferably 27 kgf or more, or 27 to 83 kgf, respectively. Further, the seam strength of the fabric, $PWSS^{wa}$, $PWSS^{we}$, $PWSS_{3000}{}^{wa}$, and $PWSS_{3000}{}^{we}$ expressed by Equations 3 and 4, namely, the seam strength of the fabric measured at room temperature before heat treatment and after heat treatment under the conditions of 65°C and 95% RH for 3,000 hours may be 670 N or more, or 670 N to 1650 N, preferably 690 N or more, or 690 N to 1600 N, more preferably 700 N or more, or 700 N to 1,600 N, and much more preferably 750 N or more, or 750 N to 1,500 N, respectively.

In this regard, the polyester fabric of the present invention is required to have excellent tear strength because it is rapidly expanded by high-temperature and high-pressure gas. The tear strength of the coated polyester fabric, indicating the rupture strength of the fabric for an airbag, may be 20 kgf or more, or 20 to 90 kgf, preferably 22 kgf or more, or 22 to 88 kgf, more preferably 25 kgf or more, or 25 to 85 kgf, and much more preferably 27 kgf or more, or 27 to 83 kgf, which is measured at room temperature in accordance with Autoliv's test standard E668992 for a fabric for an airbag. However, the tear strength of the non-coated polyester fabric may be 17 kgf or more, or 17 to 85 kgf, preferably 20 kgf or more, or 20 to 83 kgf, more preferably 22 kgf or more, or 22 to 80 kgf, and much more preferably 24 kgf or more, or 24 to 78 kgf, which is measured at room temperature in accordance with Autoliv's test standard E668992 for a fabric for an airbag. Here, when the tear strength of the fabric for an airbag is less than 17 kgf and 20 kgf, which are the lower limits of tears strengths of the non-coated fabric and the coated fabric, respectively, an airbag is ruptured when it is deployed, thus causing an occupant to be in danger. Although it is preferred that the tear strength of the fabric is maintained as high as possible, when it is excessively increased, the edge comb resistance of the fabric becomes low, and the air blocking effect thereof rapidly becomes poor.

As such, when the tear strength of the fabric is maintained at 20 kgf or more and the seam strength of the fabric is maintained at 670 N or more at the same time, that is, when the fabric has high tear strength and high seam strength together with high toughness, the polyester fabric for an airbag can secure sufficient energy absorbing performance at the time of airbag deployment. When the tear strength and seam strength of the fabric are not maintained above the minimum value, the polyester fabric is torn and the seams at the sewn site are tensioned when an airbag is deployed during an actual vehicle collision, and thus a passenger cannot be effectively protected, thereby severely damaging the passenger.

The polyester fabric of the present invention should maintain the $PTSRI^{wa}$ $PTSRI^{we}$, $PSSRI^{wa}$, and $PSSRI^{we}$ indices above 0.80, which were measured as shown in Equations 1-4 after heat treatment. Considering that the airbag cushion can be stored in the vehicle module under the climate conditions of high temperature for a long period of time until the airbag is deployed by a vehicle collision, the above values are very important with a view to the airbag fabric absorbing high-temperature and high-pressure inflator gas energy at the time of airbag deployment caused by a vehicle collision to protect occupants even though it is stored in the airbag module for a long time. If the values are less than 0.8, the safety of an occupant in an automobile cannot be assured at the time of airbag deployment caused by an actual vehicle collision because the airbag cushion is left in the airbag module under the climate conditions of high temperature for a long period of time.

Further, the fabric of the present invention should maintain the $PWTSRI^{wa}$ $PWTSRI^{we}$, $PWSSRI^{wa}$, and $PWSSRI^{we}$ indices above 0.83, which were measured as shown in Equations 5-8 after heat treatment of the fabric. Considering that the airbag cushion can be stored in the vehicle module under the climate conditions of high temperature and high humidity for a long period of time until the airbag is deployed by a vehicle collision, the above values are very important with a view to the airbag fabric absorbing high-temperature and high-pressure inflator gas energy at the time of airbag deployment caused by a vehicle collision to protect occupants even though it is stored in the airbag module for a long

time. If the values are less than 0.83, the safety of an occupant in an automobile cannot be assured at the time of airbag deployment caused by an actual vehicle collision because the airbag cushion is left in the airbag module under the climate conditions of high temperature and high humidity for a long period of time.

The polyester fabric for an airbag of the present invention may have a toughness of 3.2 kJ/m$^3$ or more, or 3.2 kJ/m$^3$ to 6.5 kJ/m$^3$, which is defined as the following Equation 5:

[Equation 9]

$$\text{Toughness (work of rupture)} = \int_0^{strain} F \cdot dl$$

wherein F indicates a load applied when a length of the polyester fabric increases by dl, and
dl indicates the increased length of the polyester fabric.

The polyester fabric has higher toughness (work of rupture) than the conventional fabric, and thus it can effectively absorb and endure the energy of high-temperature and high-pressure gas. In this regard, the term "toughness" is defined as the amount of energy that the fabric can absorb before rupturing under the tensile force, as defined in the above Equation 5, and means the resistance of the fabric to an instantaneous impact. When the length of a fabric is increased from 1 to 1+dl under load F, the work is F·dl, and the toughness required to break the fabric is given by the above Equation 5. In other words, the toughness is given by the area underneath the strength-elongation curve of the yarn and the fabric (See FIG. 1). The fabric exhibits higher toughness with an increase in the strength and elongation of the yarn used in the fabric. Particularly, the fabric for an airbag with low toughness is susceptible to rupture, because the low toughness results in low resistance to the instantaneous unfolding impact from the inflator under high-temperature and high-pressure conditions in the event of airbag deployment. Accordingly, the fabric of the present invention of which the toughness is, for example, below 3.2 kJ/m$^3$ is unsuitable for the fabric for an airbag.

As described above, a high-strength, high-elongation, and low-modulus yarn is used to secure excellent edge comb resistance, thereby improving the final fabric in terms of mechanical properties, energy absorbing performance under high-temperature and high-pressure gas, and foldability at the same time. In particular, the polyester fabric according to the present invention may have an edge comb resistance of 280 N or more, or 280 N to 1,100 N, which is measured at room temperature (25°C) by the method according to ASTM D 6479 (standard of the American Society for Testing and Materials). Further, the polyester fabric according to the present invention may have an edge comb resistance of 240 N or more, or 240 N to 1000 N, which is measured at 90°C. In this regard, if the edge comb resistance of the polyester fabric that is measured at room temperature (25°C) and 90°C is less than 280 N and less than 240 N, respectively, abrupt deterioration of the strength along the seam line of the airbag cushion occurs in the event of airbag deployment, so that the fabric is undesirably susceptible to rupture due to occurrence of pin holes and seam puckering during the airbag deployment.

In this case, each of the warp density and weft density of the polyester fabric, that is, each of the warpwise weaving density and weftwise weaving density of the polyester fabric, may be 36 to 65. Each of the warp density and weft density of the polyester fabric may be 36 or more in terms of allowing a polyester fabric for an airbag to secure toughness and edge comb resistance, and may be 65 or less in terms of improving the foldability of the fabric and decreasing the tear strength thereof.

Meanwhile, it is very important to minimize the elongation of the polyester fabric against the tension caused by high-pressure air in order to improve the airtightness of the polyester fabric, and to maximize the energy absorbing performance of the polyester fabric from high-temperature and high-pressure exhaust gas in order for an airbag to secure sufficient mechanical properties at the time of operating the airbag. Therefore, the fabric is woven and processed to have the cover factor (CF), represented by the following Equation 10, in the range of 1,800 to 2,460, thereby improving the airtightness and energy absorbing performance of the polyester fabric at the time of airbag deployment.

[Equation 10]

Cover factor (CF)

$$= \text{warp density(strand/inch)} \times \sqrt{\text{(warp denier)}} + \text{weft density(strand/inch)} \times \sqrt{\text{(weft denier)}}$$

Here, when the cover factor (CF) of the fabric is less than 1,800, there is a problem in that air is easily discharged to the outside during air expansion, and when the cover factor (CF) thereof is more than 2,460, there is a problem in

that the storability and foldability of the airbag cushion may be remarkably deteriorated when an airbag is mounted in an automobile.

Each of the warpwise contraction rate and weftwise contraction rate of the polyester fabric of the present invention, measured by the method according to the ASTM D 1776 (standard of the American Society for Testing and Materials), may be 1.0% or less, and preferably 0.8% or less, and after the polyester fabric is aged, each of the warpwise contraction rate and weftwise contraction rate thereof may be 1.0% or less, and preferably 0.8% or less. Here, in terms of shape stability of the fabric, it is most preferred that the warpwise contraction rate and weftwise contraction rate of the polyester fabric does not exceed 1.0%, respectively.

As described above, when the polyester fabric is made of a polyester yarn having a high strength and a low modulus, the toughness and tear strength of the fabric can be maintained, and the stiffness thereof can be remarkably decreased at the same time. The stiffness of the fabric for an airbag, measured by the method according to the ASTM D 4032 (standard of the American Society for Testing and Materials), may be 2.0 kgf or less or 0.3 to 2.0 kgf. As such, as the stiffness of the fabric is remarkably decreased compared to that of the conventional polyester fabric, the fabric for an airbag of the present invention can exhibit excellent foldability, flexibility and storability when an airbag is mounted in an automobile. As such, as the stiffness of the fabric is remarkably decreased compared to that of the conventional polyester fabric, the fabric for an airbag of the present invention can exhibit excellent foldability, flexibility and storability when an airbag is mounted in an automobile.

It is preferred that the stiffness of the polyester fabric of the present invention is maintained in the above range in order to use this polyester fabric for an airbag. When the stiffness thereof is excessively low, an airbag cannot exhibit sufficient protective and supporting functions at the time of airbag expansion and deployment, and the shape stability of the airbag is deteriorated even when the airbag is mounted in an automobile to deteriorate the storability thereof. Further, when the polyester fabric becomes excessively stiff, the airbag cannot be easily folded. Thus, in order to prevent the storability of an airbag from being deteriorated and to prevent the polyester fabric from being discolored, it is preferred that the stiffness thereof is 2.0 kgf or less. Particularly, it is preferred that the stiffness thereof is 0.8 kgf or less when the fineness of a polyester yarn is 460 denier or less, and is 2.0 kgf or less even when the fineness of a polyester yarn is 550 denier or more.

The static air permeability of the polyester fabric (non-coated fabric) according to the ASTM D 737 method (standard of the American Society for Testing and Materials) may be 10.0 cfm or less, or 0.3 to 10.0 cfm, preferably 8.0 cfm or less, or 0.3 to 8.0 cfm, and more preferably 5.0 cfm or less, or 0.3 to 5.0 cfm when $\Delta P$ is 125 Pa, and may be 14 cfm or less, or 4 to 14 cfm, and preferably 12 cfm or less, or 4 to 12 cfm when $\Delta P$ is 500 Pa. Further, the dynamic air permeability according to the ASTM D 6476 method (standard of the American Society for Testing and Materials) may be 1,700 mm/s or less, preferably 1,600 mm/s or less, or 200 to 1,600 mm/s, and more preferably 1,400 mm/s or less, or 400 to 1,400 mm/s. In this case, the term "static air permeability" means the amount of air permeating into the fabric for an airbag when a predetermined pressure is applied to the fabric. The static air permeability of the polyester fabric may become low as the single yarn fineness (Denier per Filament) of the yarn is small and the density of the fabric is low. Further, the term "dynamic air permeability" means the amount of air permeating into a fabric when average instant differential pressure of 30-70 kPa is applied to the fabric. Like the static air permeability, the dynamic air permeability of the fabric may become low as the single yarn fineness of the yarn is small and the density of the fabric is high.

In particular, the air permeability of the polyester fabric can be remarkably lowered by applying a rubber coating layer to the polyester fabric, and in this case, the air permeability thereof is approximately 0 cfm. However, when the coating fabric for airbag of the present invention is coated with rubber, the static air permeability thereof according to the ASTM D 737 method (standard of the American Society for Testing and Materials) may be 0.1 cfm or less, or 0 to 0.1 cfm, and preferably 0.05 cfm or less, or 0 to 0.05 cfm when $\Delta P$ is 125 Pa, and may be 0.3 cfm or less, or 0 to 0.3 cfm, and preferably 0.1 cfm or less or 0 to 0.1 cfm when $\Delta P$ is 500 Pa.

Here, in terms of maintaining the airtightness of the fabric for an airbag, it may be not preferred that the static air permeability of the non-coated or coated polyester fabric of the present invention exceeds the upper limit of the above static air permeability range, or the dynamic air permeability thereof exceeds the upper limit of the above dynamic air permeability range.

Preferably, the polyester fabric may further include a rubber coating layer applied or laminated on the surface thereof. The rubber may be at least one selected from the group consisting of powdered silicone, liquid silicone, polyurethane, chloroprene, neoprene, and emulsified silicone, and the kinds of the rubber are not limited thereto. In terms of environment-friendly and mechanical characteristics, however, it is preferred that the polyester fabric is coated with liquid silicone.

The rubber coating layer is applied onto the polyester fabric in an amount of 20 to 200 $g/m^2$, and preferably 20 to 100 $g/m^2$ per unit area of the polyester fabric. Particularly, in the case of a polyester fabric for a one-piece-woven (OPW) type side curtain airbag, the amount of rubber applied thereto may be 30 $g/m^2$ to 95 $g/m^2$, and in the case of a flat-woven polyester fabric for an airbag, the amount of rubber applied thereto may be 20 $g/m^2$ to 50 $g/m^2$.

Further, the scrub resistance number of the polyester fabric of the present invention according to the ISO 5981

(standard of the International Standardization Organization) may be 600 times or more, or 600 to 2,500 times. In particular, if the fabric for an airbag does not have the sufficient scrub resistance, the coating layer is easily stripped at the time of airbag deployment due to an actual vehicle collision while the airbag cushion is stored in the module under the climate conditions of high temperature and high humidity, and thus the airbag cushion cannot endure the high-temperature and high-pressure inflator gas pressure. The polyester fabric of the present invention is preferably applied with not the conventional liquid silicone coating agent for the nylon 66, but with the liquid silicone coating agent suitable for the polyester fabric for an airbag, thereby satisfying excellent scrub resistance.

The liquid silicone coating agent usable in the polyester fabric of the present invention may further include an adhesion promoter and a crosslinking agent in order to control viscosity of the base silence polymer and enhance adhesion between the polyester fabric and the silicone agent. In this regard, the adhesion promoter may be included in an amount of approximately 0.2 to 8.0 parts by weight, and preferably 0.5 to 7.5 parts by weight, based on 100 parts by weight of the total coating agent. The crosslinking agent may be included in an amount of approximately 0.2 to 8.0 parts by weight, and preferably 0.5 to 7.5 parts by weight. As the adhesion promoter, 1,3,5-tris(trimethoxysilylpropyl)isocyanate or 3-glycidoxypropyltrimethoxysilane or the like may be used. As the crosslinking agent, a silicone crosslinker agent having two or more of reactive silicon hydride may be used. Further, the liquid silicone coating agent may have the viscosity of 30,000 to 350,000 mPa·s, and preferably 35,000 to 330,000 mPa·s, which is measured at room temperature (25°C).

The coating fabric needs sufficient scrub resistance in order to secure excellent storability and foldability at the time of applying this polyester fabric to an airbag cushion and to endure the high-temperature and high-pressure inflator gas and strong friction occurring when the airbag cushion is deployed. Particularly, if a coating layer is easily stripped from the surface of an airbag cushion over time while the airbag cushion is stored in an automobile for a long time, the fabric is severely damaged, thus not assuring the safety of an occupant of an automobile.

Meanwhile, according to another embodiment of the present invention, a polyester fabric produced by using the polyester yarn having defined characteristics is provided. The polyester yarn used in the polyester fabric for an airbag should maintain a low fineness and a high strength, and thus may have the fineness from 300 to 700 denier.

Particularly, in the present invention, an additional end-capping agent, antioxidant, anti-hydrolysis agent or the like may be applied to the polyester polymer chip, in order to develop a polyester yarn having high-strength, high-elongation, and low-modulus characteristics and maintaining excellent physical properties without deterioration in the physical properties under high-temperature and high-humidity conditions for a long time, rather than the conventional polyester yarn having high-strength, low-elongation, and high-modulus. As such, the polyester yarn further including the additional end-capping agent, antioxidant, and anti-hydrolysis agent may be used. When such polyester yarn is applied to airbag products (cushion/fabric), a polyester fabric for an airbag having excellent performance of absorbing high-temperature and high-pressure inflator gas energy when an airbag is deployed during an actual vehicle collision, and having excellent shape stability and toughness without deterioration in the physical properties of the fabric while the airbag cushion is stored under high-temperature and high-humidity conditions for a long time can be provided.

The yarn having a higher intrinsic viscosity of, for example, 0.8 dl/g or more, or 0.8 dl/g to 1.3 dl/g than the previously known polyester yarn can be used in the fabric of the present invention. The polyester yarn having the intrinsic viscosity in the above range is preferably used such that the fabric for an airbag maintains excellent physical properties under high-temperature heat treatment conditions for a long time.

When the intrinsic viscosity of the yarn is 0.8 dl/g or more, the molecular weight of the polyester polymer is increased due to high intrinsic viscosity to obtain a high-strength yarn for an airbag even at a low draw ratio, thus satisfying the required high strength of a fabric for an airbag, and otherwise, the physical properties of high strength should be achieved at a high draw ratio. As such, when the high draw ratio is applied, the degree of orientation thereof increases such that the yarn may have a high modulus, and thus it is difficult to achieve excellent foldability of the fabric. Therefore, it is preferred that the intrinsic viscosity of the yarn is maintained at 0.8 dl/g or more to achieve the low modulus at a low draw ratio. Further, when the intrinsic viscosity of the yarn is more than 1.3 dl/g, the tension increases during elongation, thereby causing process problems, and thus it is more preferred that the viscosity thereof is 1.3 dl/g or less. When the polyester yarn of the present invention maintains such a high intrinsic viscosity, it is provided low stiffness at a low draw ratio and also with excellent mechanical properties such as sufficient impact resistance, toughness, tear strength, and seam strength for the fabric for an airbag.

Simultaneously, in order to prevent deterioration in the physical properties such as tear strength, seam strength or the like even after high-temperature heat treatment for a long time, an end-capping agent, an anti-hydrolysis agent, an antioxidant or the like may be further included to prevent main chain cleavage of the polyester polymer caused by heat treatment at a high temperature for a long time, unlike the known production method of polyester polymer. In this regard, the end-capping agent, anti-hydrolysis agent, antioxidant or the like may be included in an amount of 0.1 to 2.0 parts by weight, and preferably 0.3 to 1.7 parts by weight, based on 100 parts by weight of the total polyester polymer. For example, the polyester polymer may include a phenolic amine-based antioxidant, N,N'-hexane-1,6-diylbis(3-(3,5-di-tert-butyl-4-hydroxyphenyl- propionamide) as a primary antioxidant in an amount of 200 to 1,500 ppm, and N,N'-trimethylenebis-(3-3,5-di-t-butyl-4-hydroxyphenyl)propionamide) as a secondary antioxidant in an amount of 0.2 to 1.0 wt%. Further, it may include a carbodiimide-based anti-hydrolysis agent in an amount of 0.1 to 0.7 wt. The end-capping agent may be one or more selected from the compounds represented by the following Chemical Formula 1, and used in an amount of 0.5 to 5 equivalent weight, based on the equivalent weight of the hydroxyl group of the crosslinking agent.

[Chemical Formula 1]

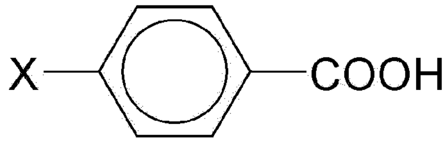

wherein X is hydrogen, an aliphatic hydrocarbon radical having 1-6 carbon atoms, an alkoxy group, an aryloxy group, or a halogen atom.

The modulus (Young's modulus) of the polyester yarn, measured at room temperature according to ASTM D 885 (standard of the American Society for Testing and Materials), may be 60 to 115 g/de, and preferably 75 to 105 g/de when the elongation thereof is 1%, that is, at the spot to which the polyester yarn is extended by 1%, and may be 50 to 90 g/de, and preferably 55 to 88 g/de when the elongation thereof is 2%, that is, at the spot to which the polyester yarn is extended by 2%. In contrast, the modulus (Young's modulus) of the conventional polyester yarn for industrial use, measured at room temperature, is 115 g/de or more when the elongation thereof is 1%, and 90 g/de or more when the elongation thereof is 2%. Therefore, it can be seen that the polyester yarn of the present invention has a much lower modulus than the conventional polyester yarn for industrial use.

In this case, the modulus of the polyester yarn, which is an elastic coefficient obtained from a gradient of an elastic region of a stress-deformation line obtained at the time of tensile testing, is a value corresponding to the ratio of elongation to deformation of the polyester yarn when both sides thereof are extended. When the modulus of the fabric is high, its elasticity may become high, but the stiffness thereof may become poor. When the modulus is excessively low, the stiffness of the fabric is good, but the elastic recovery thereof may become low, thereby deteriorating the toughness thereof. As such, a fabric for an airbag, made of the polyester yarn having a lower initial modulus than the conventional polyester yarn after heat treatment as well as at room temperature, can overcome the problem of the conventional polyester fabric having high stiffness, and exhibit excellent foldability, flexibility and storability.

The toughness of the polyester yarn can be determined using the polyester yarn rather than the polyester fabric in the above Equation 5. The toughness of the yarn measured at room temperature may be 60 to 130 J/m$^3$. In the present invention, a specific polyester yarn having a high level of toughness (work of rupture) relative to the conventional polyester fiber is used to provide a fabric for an airbag capable of effectively absorbing and enduring the energy of high-temperature and high-pressure gas.

Therefore, it is possible to manufacture a fabric for an airbag exhibiting excellent mechanical properties, storability, shape stability, impact resistance and air blocking effects using the polyester yarn having a low initial modulus and a high elongation, and preferably a high intrinsic viscosity. Accordingly, when this polyester yarn is used in the polyester fabric of the present invention, a fabric for an airbag having excellent impact resistance, shape stability, mechanical properties and airtightness as well as low stiffness and high foldability, flexibility and storability can be obtained. Such a polyester fabric exhibits excellent mechanical properties, shape stability and air blocking effects, provides excellent foldability and storability to an airbag when the airbag mounted in the narrow space of an automobile, and allows an airbag to have high flexibility to minimize the impact applied to a passenger, thus safely protecting the passenger. Therefore, it can be preferably applied to the fabric for an airbag or the like.

Preferably, the polyester yarn has a contraction stress of 0.005 to 0.075 g/d at 150°C to 200°C which corresponds to the laminate coating temperature of general coated fabrics. In other words, when each of the contraction stresses at 150°C and 200°C is 0.005 g/d or more, it is possible to prevent a fabric from becoming slack by heat during a coating process, and when each of them is 0.075 g/d or less, the relaxation stress of a fabric can be decreased when the fabric is cooled at room temperature after the coating process. The contraction stress is based on the value measured under a fixed load of 0.10 g/d.

Particularly, the polyester yarn may have a dry contraction rate of 1.0% or more, or 1.0% to 10%, preferably 1.5% or more, or 1.5% to 8.0%, and more preferably 2.0% or more, or 2.0% to 6.0%, measured at room temperature. As described, by optimizing the dry contraction rate of the polyester yarn, excellent strength and flexibility can be secured due to high strength, high elongation and low modulus of the polyester yarn, air permeability of the fabric can be effectively controlled due to excellent contraction rate, and mechanical properties such as the edge comb resistance can be improved.

As such, in order to prevent the polyester yarn from being deformed during a heat treatment process such as a coating process or the like, the polyester yarn may have a crystallinity of 40% to 55%, preferably 41% to 52%, and more preferably 41% to 50%. When the polyester yarn is applied to a fabric for an airbag, the crystallinity of the polyester yarn must be 40% or more to maintain the thermal shape stability of the fabric. When the crystallinity thereof is more than 55%, there is a problem in that the impact absorbing performance of the fabric is deteriorated because the noncrystalline region of the polyester yarn is decreased. Therefore, it is preferred that the crystallinity of the polyester yarn be 55% or less.

Further, the polyester yarn may have a tensile strength of 8.5 g/d to 11.0 g/d, preferably 8.7 g/d to 10 g/d, and more preferably 9.0 g/d to 9.8 g/d, and a breaking elongation of 15% to 30%, preferably 16% to 26%, and more preferably 17% to 25% at room temperature.

The polyester yarn is preferably a polyethylene terephthalate (PET) yarn among the typical polyesters, and more preferably a PET yarn containing at least 90 mol% of PET. In particular, a polyester polymer having an intrinsic viscosity of 1.05 dl/g or more, or 1.05 to 2.0 dl/g, that is, a polyester yarn prepared in a PET chip may be used in the fabric of the present invention. It is preferred that the polyester yarn is prepared by using a polyester polymer having an intrinsic viscosity of 1.05 dl/g or more, in order to maintain excellent physical properties of the fabric for an airbag at room temperature and even after heat treatment at high temperature for a long period of time. Further, in order to secure thermal stability of the polymer and to minimize the increase in the amount of carboxyl end group due to the scission of the molecular chain during production of the yarn, a polyester polymer having an intrinsic viscosity of 2.0 dl/g or less is used. In order to prevent the main chain of the polyester polymer from being cut due to heat treatment at a high temperature for a long time, the polyester yarn including the end-capping agent, the anti-hydrolysis agent, the antioxidant or the like may be used.

In this regard, the polyester yarn is prepared by using a high-viscosity PET polymer having a low carboxyl end group (CEG) content, preferably, of 30 meq/kg or less so as to have high-strength and high-elongation characteristics.

Further, the polyester yarn may have a single yarn fineness of 2.5 to 6.8 DPF. Preferably, the yarn has a single yarn fineness of 2.5 DPF or more in terms of weaving performance of the fabric for an airbag and spinning performance of the yarn, and a single yarn fineness of 6.8 DPF or less in terms of air blocking effect and storability of the fabric for an airbag. When the number of filaments of the yarn is large, the polyester yarn becomes soft to the touch, but when the number of filaments thereof is excessively large, the spinnability thereof becomes poor. Therefore, it is preferred that the number of filaments thereof is 96 to 160.

As described above, because the polyester fabric of the present invention is manufactured by using the polyester yarn having an intrinsic viscosity, a heat resistance, an initial modulus and an elongation within the optimum range, it is able to exhibit excellent performance when manufactured as a fabric for an airbag.

The polyester yarn used in the manufacture of the fabric of the present invention may be manufactured by a method including the steps of melt-spinning a PET polymer to prepare an undrawn yarn, and drawing the undrawn yarn. In the process of manufacturing the yarn, the specific conditions or procedures of each step are directly and indirectly reflected in the physical properties of the polyester yarn, and thus a polyester yarn effectively used in the fabric for an airbag of the present invention can be manufactured.

In accordance with a more preferred embodiment, the high-strength, high-elongation, and low-modulus polyester yarn can be prepared by a method including the steps of melt-spinning a high-viscosity polymer containing 90 mol% or more of polyethylene terephthalate and having an intrinsic viscosity of 1.05 dl/g or more at a low temperature of 270 to 320°C to form a polyester undrawn yarn; and drawing the undrawn polyester yarn at a draw ratio of 4.8 to 6.7. In this method, a high-viscosity PET polymer having a low CEG (carboxyl end group) content, preferably 30 meq/kg or less, is subjected to melt spinning at a low temperature, more preferably at a low temperature and low spinning rate, in which the melt-spinning process suppresses a decrease of intrinsic viscosity and an increase of CEG content of the fiber to the maximum extent, maintaining good mechanical properties of the yarn and securing high elongation. Moreover, the subsequent drawing process which involves drawing at an optimized draw ratio of 4.8 to 6.7 can suppress a decrease of elongation to the maximum extent, thereby producing a high-strength, high-elongation, and low-modulus polyester yarn, which can be effectively used in the manufacture of the fabric for an airbag.

In this regard, the higher temperature, for example, above 320°C in the melt spinning process undesirably leads to thermal degradation of the PET polymer in great extent, intensifying a decrease of intrinsic viscosity and an increase of CEG content, increases molecular orientation to accelerate a decrease of elongation and an increase of modulus, and causes damage to the surface of the yarn to deteriorate the whole properties of the yarn. An extremely higher draw ratio, for example, greater than 6.7 in the drawing process results in excessive drawing, consequently with breaking or mowing of the drawn yarn, and thus the resultant polyester yarn cannot have properties desirable for use in the fabric for an airbag. Further, a relatively low draw ratio in the drawing process leads to a low degree of orientation of the fabric and thus partially drops the strength of the resultant polyester yarn. Therefore, the drawing process is preferably performed at the draw ratio of 4.8 or more to produce a high-strength, high-elongation, and low-modulus polyester yarn that is suitable for use in the fabric for an airbag.

Meanwhile, the subsequent processes can be performed under the conditions, for example, relaxation rate or the like, optimized with a view to producing a high-strength, high-elongation, and low-modulus polyester yarn at a high draw ratio. In this regard, the relaxation rate may be 16% or less, or 1% to 16%, preferably 10% or less, or 1% to 10%, and more preferably 7% or less, or 1.1% to 7%. The lower limit of the relaxation rate thereof may be selected within the range in which the contraction of the polyester yarn can be sufficiently exhibited. For example, the lower limit thereof may be 1% or more. In this case, when the relaxation rate thereof is excessively small, for example, less than 1%, it is difficult to manufacture a high-elongation and low-modulus polyester yarn because high fiber orientation is formed, like in the case of a high draw ratio condition. Further, when the relaxation rate thereof is more than 16%, it is difficult to secure workability because the yarn severely trembles on a godet roller.

Such a process optimization leads to production of a polyester yarn for airbag having a low initial modulus, a high strength, and a high elongation. The optimization of melt spinning and drawing processes contributes to minimization of the CEG (Carboxyl End Group) content, in which the CEG acts as an acid under high humidity to break the molecular chain of the polyester yarn. The resultant polyester yarn has a low initial modulus and a high elongation, and thus can be preferably used for fabric for an airbag superior in mechanical properties, storability, shape stability, toughness, impact resistance, and air blocking effect.

In accordance with still another embodiment of the present invention, a method for producing the fabric for an airbag using the polyester yarn is provided. The method for producing the fabric for an airbag according to the present invention may include the steps of weaving a polyester yarn having a fineness of 300 to 700 denier to form a grey cloth for an airbag; scouring the grey cloth for an airbag; and thermally fixing the scoured grey cloth.

In the present invention, the polyester yarn may be formed into a final fabric for an airbag by the typical weaving, scouring and tentering processes. In this case, the weaving shape of the fabric is not particularly limited. Preferably, the polyester fabric may be a flat-woven type fabric or a one-piece-woven (OPW) type fabric.

Particularly, the fabric for an airbag of the present invention may be manufactured by performing beaming, weaving, scouring, and thermal fixing processes using the polyester yarn as a warp and a weft. The fabric may be manufactured using a general weaving machine, and the kind of the weaving machine is not limited. However, a flat-woven type fabric may be manufactured using a Rapier loom, an air jet loom, a water jet loom or the like, and an OPW type fabric may be manufactured using a Jacquard loom.

However, in the present invention, a polyester yarn having higher strength, higher elongation and lower contraction rate than the conventional polyester yarn is used, so that the heat treatment process may be performed at a higher temperature than that of the conventional polyester yarn. That is, in the present invention, the woven grey fabric is subjected to the scouring and thermal fixing processes. In order to provide excellent physical properties for the fabric for an airbag, and to maintain the physical properties of the fabric even after heat treatment at a high temperature for a long time, it is preferred that overfeed (OF) of the pin-type equipment is maintained at 1.5-6.0% during the thermal fixing process, and the thermal fixing process is consecutively performed twice or three times. The thermally fixed fabric is coated with a rubber component, dried and then cured at a vulcanization temperature of 140 to 210°C. The vulcanization temperature must be 140°C or above in terms of maintaining the mechanical properties of the fabric, such as tear strength, and 210°C or below in terms of stiffness. In particular, the heat treatment process may be performed by multiple steps to maintain excellent physical properties even after heat treatment at a high temperature for a long time. For example, primary heat treatment is performed at 150 to 170°C, secondary heat treatment is performed at 170 to 190°C, and then tertiary heat treatment is performed at 190 to 210°C.

As such, when the polyester fabric of the present invention is manufactured by high-temperature heat treatment, the shape stability, air blocking effects, stiffness and tear strength thereof can be more improved because of the optimized contraction rate of the polyester yarn itself.

Further, the curing process may be performed for 30 to 120 seconds, preferably for 35 to 100 seconds, and most preferably for 40 to 90 seconds at the above vulcanization temperature. Here, when the curing time is less than 30 seconds, there is a problem in that a coating layer is not effectively cured because of rubber, so that the mechanical properties of the fabric are deteriorated, and thus the coating layer is stripped from the fabric. Further, when the curing time is more than 120 seconds, there is a problem in that the stiffness and thickness of the finally produced fabric increase, thereby deteriorating the foldability thereof.

As described above, one side or both sides of the fabric for an airbag of the present invention may be coated with rubber, and the rubber coating layer may be formed by a knife coating method, a doctor blade method or a spray coating method. However, the coating method is not limited thereto.

The fabric for an airbag thus coated in this way may be formed into an airbag cushion by cutting and sewing processes. The airbag is not specifically limited in shape and may be formed in any normal shape.

Meanwhile, still another embodiment of the present invention provides an airbag for an automobile, including the above-mentioned polyester fabric. Further, an airbag system including the airbag is provided. This airbag system may be equipped with a general apparatus that is well known to those skilled in the art.

The airbags may be largely classified into frontal airbags and side curtain airbags. The frontal airbags includes

an airbag for a driver seat, an airbag for a passenger seat, an airbag for side protection, an airbag for knee protection, an airbag for ankle protection, an airbag for pedestrian protection or the like. The side curtain airbags are used to protect a passenger at the time of side collision and overturn of an automobile. Therefore, the airbag of the present invention may be a frontal airbag or a side curtain airbag.

In the present invention, matters other than the above-mentioned contents are not particularly limited because they can be added or omitted according to circumstances.

[Advantageous Effects]

According to the present invention, there is provided a polyester fabric showing excellent energy absorbing performance or the like at the time of airbag deployment, and an airbag for an automobile obtained by using the same.

This polyester fabric is produced by using a low-modulus, high-strength, and high-elongation polyester yarn, and thus thermal constriction of the fabric is minimized even after high-temperature heat treatment, and the fabric can exhibit excellent foldability and flexibility as well as excellent shape stability, mechanical properties and air blocking effects. When mounted in an automobile, storability can be remarkably improved, and the impact applied to a passenger can be minimized, thereby protecting the passenger safely.

In particular, the fabric for an airbag and the airbag cushion thus manufactured are able to maintain mechanical properties, such as tear strength, seam strength or the like, at the excellent level even after high-temperature and high-humidity heat treatment for a long time. Therefore, it is advantageous in that the airbag actually stored under severe conditions of high temperature and high humidity is able to protect the passenger safely when the airbag cushion is deployed during a vehicle collision.

Therefore, the polyester fabric of the present invention can be very preferably used to manufacture an airbag for an automobile.

[Description of Drawings]

FIG. 1 shows an example of the strength-elongation curve of a general fabric, in which the area underneath the strength-elongation curve may be defined as toughness (work of rupture, $J/m^3$);

FIG. 2 is a schematic view showing a scrub resistance-measuring device according to International Organization for Standardization ISO 5981;

FIG. 3 is a schematic view showing a tear strength-measuring device and a measurement method according to Autoliv's test standard E668992 for a fabric for an airbag;

FIG. 4 is a schematic view showing a seam strength-measuring device and a measurement method according to Autoliv's test standard E668992 for a fabric for an airbag;

FIG. 5 is a graph showing tear strength in the warp and weft directions before aging (room temperature, 25°C) of the polyester fabric of Example 5 of the present invention and after heat-aging thereof at 110°C for 3,000 hours;

FIG. 6 is a graph showing seam strength in the warp and weft directions before aging (room temperature, 25°C) of the polyester fabric of Example 5 of the present invention and after heat-aging thereof at 110°C for 3,000 hours;

FIG. 7 is a graph showing tear strength in the warp and weft directions before aging (room temperature, 25°C) of the polyester fabric of Comparative Example 5 of the present invention and after heat-aging thereof at 110°C for 3,000 hours;

FIG. 8 is a graph showing seam strength in the warp and weft directions before aging (room temperature, 25°C) of the polyester fabric of Comparative Example 5 of the present invention and after heat-aging thereof at 110°C for 3,000 hours;

FIG. 9 is a graph showing tear strength in the warp and weft directions before aging (room temperature, 25°C) of the polyester fabric of Example 5 of the present invention and after wet-aging thereof under the conditions of 65°C and 95% RH for 3,000 hours;

FIG. 10 is a graph showing seam strength in the warp and weft directions before aging (room temperature, 25°C) of the polyester fabric of Example 5 of the present invention and after wet-aging thereof under the conditions of 65°C and 95% RH for 3,000 hours;

FIG. 11 is a graph showing tear strength in the warp and weft directions before aging (room temperature, 25°C) of the polyester fabric of Comparative Example 5 of the present invention and after wet-aging thereof under the conditions of 65°C and 95% RH for 3,000 hours; and

FIG. 12 is a graph showing seam strength in the warp and weft directions before aging (room temperature, 25°C) of the polyester fabric of Comparative Example 5 of the present invention and after wet-aging thereof under the conditions of 65°C and 95% RH for 3,000 hours;

[Mode for Invention]

Hereinafter, the preferred Examples are provided for better understanding of the present invention. However, the following Examples are for illustrative purposes only, and the present invention is not intended to be limited by the following Examples.

Examples 1-5

PET chips having an intrinsic viscosity of 1.18-1.83 dl/g were processed into a polyester yarn through a melt spinning machine in one step at a spinning temperature of 306-312°C and a draw ratio of 6.10. The yarn was woven into a grey fabric for an airbag through a rapier loom, and the grey fabric was subjected to scouring. Then, a heat treatment process was consecutively performed three times at OF of approximately 4.5% to produce a fabric for an airbag. The fabric thus obtained was coated with a liquid silicone rubber (LSR) resin by a knife over-roll coating method to produce a silicon-coated fabric.

The liquid silicone coating agent had a viscosity of 55,000 mPa · s, which was measured at room temperature (25°C), and the total coating agent together with the silicone rubber (LSR) resin includes 0.65 wt% of 1,3,5-tris(trimethoxysilylpropyl)isocyanate as an adhesion promoter and 0.65 wt% of a silicone crosslinker agent having two or more of reactive silicon hydride as a crosslinking agent, based on 100 parts by weight thereof.

In the regard, physical properties of the polyester yarn, such as intrinsic viscosity, toughness, modulus at 1% and 2% elongations, tensile strength, breaking elongation, dry contraction rate or the like, are given in the following Table 1. The physical properties of the yarn were measured at room temperature (25°C x 65%RH).

The warp and weft weave densities, weaving type, heat treatment temperature, rubber component, and resin coating amount are also given in the following Table 1, and the other conditions were in accordance with the typical conditions for the production of a polyester fabric for airbag.

[Table 1]

| | Example 1 | Example 2 | Example 3 | Example 4 | Example 5 |
|---|---|---|---|---|---|
| PET content (mol%) | 100 | 100 | 100 | 100 | 100 |
| Intrinsic viscosity of yarn (dl/g) | 1.03 | 1.05 | 1.10 | 1.05 | 1.10 |
| Toughness of yarn ($J/m^3$) | 106 | 111 | 112 | 110 | 113 |
| Modulus of yarn (at 1% elongation, g/de) | 97 | 97 | 96 | 94 | 93 |
| Modulus of yarn (at 2% elongation, g/de) | 76 | 75 | 75 | 75 | 73 |
| Tensile strength of yarn (g/de) | 9.18 | 9.25 | 9.35 | 9.39 | 9.45 |
| Breaking elongation of yarn (%) | 17.8 | 18.1 | 18.6 | 18.5 | 18.8 |
| single yarn fineness (DPF) | 4.08 | 3.77 | 3.40 | 4.92 | 4.44 |
| Total fineness(de) | 490 | 490 | 490 | 640 | 640 |
| Number of filament | 120 | 130 | 144 | 130 | 144 |
| Weave density (warp×weft) | 47x47 | 47x47 | 47x47 | 44x44 | 44x44 |
| Weaving type | Plain weaving | Plain weaving | Plain weaving | Plain weaving | Plain weaving |
| Heat treatment/ Vulcanization temperature (°C) | 165-185 | 165-190 | 170-190 | 170-195 | 170-195 |
| Rubber component | Liquid silicone | Liquid silicone | Liquid silicone | Liquid silicone | Liquid silicone |

(continued)

| | Example 1 | Example 2 | Example 3 | Example 4 | Example 5 |
|---|---|---|---|---|---|
| Rubber coating weight ($g/m^2$) | 25 | 25 | 25 | 25 | 25 |

Polyester Tearing Strength Retention Index (PTSRI) and Polyester Seam Strength Retention Index (PSSRI) of the polyester fabrics manufactured in Examples 1-5 were measured after high-temperature heat treatment for a long time by the following method, and the physical properties thus measured are given in the following Table 2.

(a) Tear strength retention index after high-temperature heat treatment for a long time

The tear strength ($PTS^{wa}$, $PTS^{we}$, $PTS_{3000}{}^{wa}$, $PTS_{3000}{}^{we}$) was measured before and after heat treatment of the coated fabric according to Autoliv's test standard E668992 for a fabric for an airbag, and FIG. 3 shows the tear strength-measuring device and the measurement method.

First, three test specimens in dimension of 70 mm × 250 mm were cut out, and the upper and lower ends of the specimen were gripped between left and right spaces of the upper and lower jaw faces, that is, A and B were placed in the middle of the jaw faces as shown in FIG. 3, in a testing machine according to Autoliv's test standard E668992 for a fabric for an airbag. Based on 100 mm of the distance between the jaw faces, the jaw faces were moved apart, that is, the upper jaw face was moved upwards and the lower jaw face was moved downwards, at a tearing rate of 200 mm/min to measure the tear strength for the fabric.

Meanwhile, the tear strength retention index in the warp direction ($PTSRI^{wa}$) as shown in the following Equation 1, and the tear strength retention index in the weft direction ($PTSRI^{we}$) as shown in the following Equation 2 were calculated using the tear strength in the warp direction ($PTS^{wa}$) and the tear strength in the weft direction ($PTS^{we}$) which were measured at room temperature, and the tear strength in the warp direction ($PTS_{3000}{}^{wa}$) and the tear strength in the weft direction ($PTS_{3000}{}^{we}$) which were measured after heat treatment at 110°C for 3,000 hours.

[Equation 1]

$$PTSRI^{wa} = PTS_{3000}{}^{wa}/PTS^{wa}$$

[Equation 2]

$$PTSRI^{we} = PTS_{3000}{}^{we}/PTS^{we}$$

(b) Seam strength retention index after high-temperature heat treatment for a long time

The seam strength was measured before and after heat treatment of the coated fabric according to Autoliv's test standard E668992 for a fabric for an airbag, and FIG. 4 shows the seam strength-measuring device and the measurement method.

First, three test specimens in dimension of 100 mm × 170 mm were cut out, and each of the specimens was cut in half to have a vertical length of 85 mm. The two specimens thus cut in half were combined. The combined specimens were sewn at a vertical point of 15 mm, that is, between C and D points of FIG. 4, using nylon 66 yarn (840D - 1260D) at a stitch density of 30-50 ea/100 mm. Both ends of the sewn specimen were gripped between the upper and lower jaw faces in a testing machine according to Autoliv's test standard E668992 for a fabric for an airbag. Based on 76.2 mm of the distance between the jaw faces, the jaw faces were moved apart, that is, the upper jaw face was moved upwards and the lower jaw face was moved downwards, at a rate of 200 mm/min to measure the tear strength for the fabric.

Meanwhile, the seam strength retention index in the warp direction ($PSSRI^{wa}$) as shown in the following Equation 3, and the seam strength retention index in the weft direction ($PSSRI^{we}$) as shown in the following Equation 4 were calculated using the seam strength in the warp direction ($PSS^{wa}$) and the seam strength in the weft direction ($PSS^{we}$) which were measured at room temperature, and the seam strength in the warp direction ($PSS_{3000}{}^{wa}$) and the tear strength in the weft direction ($PSS_{3000}{}^{we}$) which were measured after heat treatment at 110°C for 3,000 hours.

[Equation 3]

$$PSSRI^{wa} = PSS_{3000}{}^{wa}/PSS^{wa}$$

[Equation 4]

$$PSSRI^{we} = PSS_{3000}{}^{we}/PSS^{we}$$

[Table 2]

| | Example 1 | Example 2 | Example 3 | Example 4 | Example 5 |
|---|---|---|---|---|---|
| $PTS^{wa}$(kgf) | 40.2 | 40.5 | 41.0 | 64.3 | 65.5 |
| $PTS_{3000}{}^{wa}$(kgf) | 40.2 | 39.7 | 42.3 | 62.4 | 67.5 |
| $PTSRI^{wa}$ | 1.00 | 0.98 | 1.03 | 0.97 | 1.03 |
| $PTS^{we}$(kgf) | 40.8 | 41.2 | 41.8 | 65.3 | 66.2 |
| $PTS_{3000}{}^{we}$(kgf) | 39.2 | 40.8 | 42.2 | 64.0 | 67.5 |
| $PTSRI^{we}$ | 0.96 | 0.99 | 1.01 | 0.98 | 1.03 |
| $PSS^{wa}$(N) | 1027 | 1030 | 1035 | 1113 | 1120 |
| $PSS_{3000}{}^{wa}$(N) | 924 | 948 | 963 | 1013 | 1042 |
| $PSSRI^{wa}$ | 0.90 | 0.92 | 0.93 | 0.91 | 0.93 |
| $PSS^{we}$(N) | 1020 | 1033 | 1035 | 1120 | 1125 |
| $PSS_{3000}{}^{we}$(N) | 908 | 961 | 973 | 1064 | 1091 |
| $PSSRI^{we}$ | 0.89 | 0.93 | 0.94 | 0.95 | 0.97 |

Meanwhile, the tear strength and seam strength in the warp and weft directions of the polyester fabric of Example 5 that were measured before aging (room temperature, 25°C) and after heat-aging at a high temperature of 110°C for a long time of 3,000 hours are shown in FIGS. 5 and 6, respectively.

FIGs. 5 and 6 are graphs showing the retention degree of the tear strength in the warp and weft directions and the seam strength in the warp and weft directions of the fabric of Example 5 that was heat-treated at 110°C for 3,000 hours, relative to those at room temperature. As shown in FIGs. 5 and 6, the polyester fabric of Example 5 showed excellent stability in tear strength and seam strength even after 3,000 hours. These results are meaningful in that although the airbag cushion is stored in the automobile for a long time, the seams at the sewn site of the cushion are not tensioned and the fabric is not torn when deployed during a vehicle collision, and thus a passenger can be safely protected from the collision.

Meanwhile, FIG. 7 and 8 are graphs showing the retention degree of the tear strength in the warp and weft directions and the seam strength in the warp and weft directions of the fabric of Comparative Example 5 that was heat-treated at 110°C for 3,000 hours, relative to those at room temperature. As shown in FIGs. 7 and 8, however, the polyester fabric of Comparative Example 5 showed a great deterioration in the physical properties as the heat treatment time increased, and had approximately 72%-75% of tear strength and seam strength, relative to those at room temperature, at the elapsed time point of 3,000 hours. These results suggest that when the airbag cushion manufactured by using the polyester fabric of Comparative Example 5 is stored in the automobile for a long time and then deployed during a vehicle collision, the fabric is easily torn and the sewn site is ruptured due to high-temperature and high-pressure inflator gas, and thus a passenger cannot be safely protected.

As shown in Table 2, the tear strength retention index in the warp direction ($PTSRI^{wa}$) and the tear strength retention index in the weft direction ($PTSRI^{we}$) of the polyester fabrics of Examples 1-5 that were measured after high-temperature heat treatment (110°C x 3,000 hours) were 0.97-1.03 and 0.96-1.03, respectively, and the seam strength retention index in the warp direction ($PSSRI^{wa}$) and the seam strength retention index in the weft direction ($PSSRI^{we}$) thereof were 0.90-0.93 and 0.89-0.97, respectively, which indicates the actual retention degrees of the physical properties of the airbag cushion because it is stored in an automobile under the climate condition of high temperature for a long

time when no vehicle collision occurs. Therefore, the polyester fabric manufactured by using the high-strength, high-elongation, and low-modulus yarn of the present invention is able to exhibit excellent performance of protecting a passenger from a vehicle collision, even though the airbag cushion manufactured therefrom is left at a high temperature for a long time.

Further, polyester wet tearing strength retention index (PWTSRI) and polyester wet seam strength retention index (PWSSRI) of the polyester fabrics manufactured in Examples 1-5 were measured after heat treatment under the conditions of high-temperature and high-humidity for a long time by the following method, and the physical properties thus measured are given in the following Table 3.

(a) Tear strength retention index after heat treatment at high temperature and high humidity for a long time

The tear strength ($PWTS^{wa}$, $PWTS^{we}$, $PWTS_{3000}^{wa}$, $PWTS_{3000}^{we}$) was measured before and after heat treatment of the coated fabric according to Autoliv's test standard E668992 for a fabric for an airbag using the device and the method as in FIG. 3.

The tear strength retention index in the warp direction ($PWTSRI^{wa}$) as shown in the following Equation 5, and the tear strength retention index in the weft direction ($PWTSRI^{we}$) as shown in the following Equation 6 were calculated using the tear strength in the warp direction ($PWTS^{wa}$) and the tear strength in the weft direction ($PWTS^{we}$) which were measured at room temperature, and the tear strength in the warp direction ($PWTS_{3000}^{wa}$) and the tear strength in the weft direction ($PWTS_{3000}^{we}$) which were measured after heat treatment under the conditions of 65°C x 95% RH for 3,000 hours.

[Equation 5]

$$PWTSRI^{wa} = PWTS_{3000}^{wa}/PWTS^{wa}$$

[Equation 6]

$$PWTSRI^{we} = PWTS_{3000}^{we}/PWTS^{we}$$

(b) Seam strength retention index after heat treatment at high temperature and high humidity for a long time

The seam strength was measured before and after heat treatment of the coated fabric according to Autoliv's test standard E668992 for a fabric for an airbag using the device and the method as in FTG. 4.

The seam strength retention index in the warp direction ($PWSSRI^{wa}$) as shown in the following Equation 7, and the seam strength retention index in the weft direction ($PWSSRI^{we}$) as shown in the following Equation 8 were calculated using the seam strength in the warp direction ($PWSS^{wa}$) and the seam strength in the weft direction ($PWSS^{we}$) which were measured at room temperature, and the seam strength in the warp direction ($PWSS_{3000}^{wa}$) and the seam strength in the weft direction ($PWSS_{3000}^{we}$) which were measured after heat treatment under the conditions of 65°C and 95% RH for 3,000 hours.

[Equation 7]

$$PWSSRI^{wa} = PWSS_{3000}^{wa}/PWSS^{wa}$$

[Equation 8]

$$PWSSRI^{we} = PWSS_{3000}^{we}/PWSS^{we}$$

[Table 3]

| | Example 1 | Example 2 | Example 3 | Example 4 | Example 5 |
|---|---|---|---|---|---|
| $PWTS^{wa}$(kgf) | 41.2 | 41.5 | 42.0 | 65.3 | 66.5 |

(continued)

| | Example 1 | Example 2 | Example 3 | Example 4 | Example 5 |
|---|---|---|---|---|---|
| $PWTS_{3000}^{wa}$(kgf) | 38.3 | 39.0 | 40.3 | 61.4 | 63.8 |
| $PWTSRI^{wa}$ | 0.93 | 0.94 | 0.96 | 0.94 | 0.96 |
| $PWTS^{we}$(kgf) | 41.3 | 42.2 | 42.5 | 66.4 | 67.0 |
| $PWTS_{3000}^{we}$(kgf) | 38.4 | 40.1 | 41.7 | 63.7 | 65.7 |
| $PWTSRI^{we}$ | 0.93 | 0.95 | 0.98 | 0.96 | 0.98 |
| $PWSS^{wa}$(N) | 1130 | 1133 | 1140 | 1217 | 1225 |
| $PWSS_{3000}^{wa}$(N) | 1074 | 1076 | 1094 | 1168 | 1188 |
| $PWSSRI^{wa}$ | 0.95 | 0.95 | 0.96 | 0.96 | 0.97 |
| $PWSS^{we}$(N) | 1120 | 1133 | 1135 | 1220 | 1225 |
| $PWSS_{3000}^{we}$(N) | 1042 | 1065 | 1090 | 1159 | 1201 |
| $PWSSRI^{we}$ | 0.93 | 0.94 | 0.96 | 0.95 | 0.98 |

Meanwhile, the tear strength and seam strength in the warp and weft directions of the polyester fabric of Example 5 that were measured before aging (room temperature, 25°C) and after high-temperature wet-aging under the conditions of 65°C and 95% RH for 3,000 hours are shown in FIGs. 9 and 10, respectively.

FIGs. 9 and 10 are graphs showing the retention degree of the tear strength in the warp and weft directions and the seam strength in the warp and weft directions of the fabric of Example 5 that was wet-aged under the conditions of 65°C and 95% RH for 3,000 hours, relative to those at room temperature. As shown in FIGs. 9 and 10, the polyester fabric of Example 5 showed excellent stability in tear strength and seam strength even after 3,000 hours. These results are meaningful in that although the airbag cushion is stored in the automobile under the climate conditions of high temperature and high humidity for a long time, the seams at the sewn site of the cushion are not tensioned and the fabric is not torn when deployed during a vehicle collision, and thus a passenger can be safely protected from the collision.

Meanwhile, FIG. 11 and 12 are graphs showing the retention degree of the tear strength in the warp and weft directions and the seam strength in the warp and weft directions of the fabric of Comparative Example 5 that was wet-aged under the conditions of 65°C and 95% RH for 3,000 hours, relative to those at room temperature. As shown in FIGs. 11 and 12, however, the polyester fabric of Comparative Example 5 showed a great deterioration in the physical properties as the heat treatment time increased, and had approximately 72%-75% of tear strength and seam strength, relative to those at room temperature, at the elapsed time point of 3,000 hours. These results suggest that when the airbag cushion manufactured by using the polyester fabric of Comparative Example 5 is stored in the automobile for a long time and then deployed during a vehicle collision, the fabric is easily torn and the sewn site is ruptured due to high-temperature and high-pressure inflator gas, and thus a passenger cannot be safely protected.

As shown in Table 3, the tear strength retention index in the warp direction ($PWTSRI^{wa}$) and the tear strength retention index in the weft direction ($PWTSRI^{we}$) of the polyester fabrics of Examples 1-5 that were measured after heat treatment under high-temperature and high-humidity conditions (65°C x 95%RH) for 3,000 hours were 0.93-0.96 and 0.93-0.98, respectively, and the seam strength retention index in the warp direction ($PWSSRI^{wa}$) and the seam strength retention index in the weft direction ($PWSSRI^{we}$) thereof were 0.95-0.97 and 0.93-0.98, respectively, which indicates the actual retention degrees of the physical properties of the airbag cushion because it is stored in an automobile under the climate condition of high temperature for a long time when no vehicle collision occurs. Therefore, the polyester fabric manufactured by using the high-strength, high-elongation, and low-modulus yarn of the present invention is able to exhibit excellent performance of protecting a passenger from a vehicle collision, even though the airbag cushion manufactured therefrom is left at a high temperature for a long time.

Further, various physical properties of the polyester fabrics manufactured in Examples 1-5 were measured by the following method, and the physical properties thus measured are given in the following Table 4.

(c) Tensile strength and Tensile elongation

The coated and non-coated polyester fabrics was cut into a test specimen, which was gripped in the lower clamp of a tensile strength testing machine according to the ISO 13934-1 method (standard of the International Standardization Organization), while the upper clamp was moved upward, to measure the tensile strength and the tensile elongation when the airbag fabric specimen was ruptured.

(d) Toughness of fabric

The toughness (J/m$^3$) was calculated by the following Equation 9:

[Equation 9]

$$\text{Toughness (work of rupture)} = \int_0^{strain} F \cdot dl$$

wherein F indicates a load applied when a length of the polyester fabric increases by dl, and
dl indicates the increased length of the polyester fabric.

In this case, the toughness of the fabric was measured for the non-coated fabric before the coating process.

(e) Edge comb resistance

The non-coated fabric before the coating process was measured in regard to the edge comb resistances at room temperature (25 °C) and 90°C according to the ASTM D 6479 method (standard of the American Society for Testing and Materials).

(f) Cover factor (CF)

The cover factor of the non-coated fabric was calculated by the following Equation 10:

[Equation 10]

$$\text{Cover factor (CF)} = \text{warp density(strand/inch)} \times \sqrt{\text{(warp denier)}} + \text{weft density(strand/inch)} \times \sqrt{\text{(weft denier)}}$$

(g) Contraction rate of fabric

The contraction rate in the warp and weft directions of the fabric was measured according to ASTM D 1776 (standard of the American Society for Testing and Materials). First, a non-coated fabric before the coating process was cut to prepare a specimen having a length of 20 cm in the warp and weft directions (length before contracted), and then heat-treated in a chamber at 149°C for 1 hour, and then the length thereof was measured. Based on this measured length, the contraction rate in the warp and weft directions of the fabric {(length before contracted - length after contracted) / length before contracted x 100%} was calculated.

(h) Stiffness

The non-coated fabric before the coating process was evaluated in regard to stiffness according to the ASTM D 4032 procedure (circular bend test method) using a stiffness testing machine. A cantilever method was adopted for the measurement of stiffness, and the stiffness can be measured by measuring the length of the bent polyester fabric using a cantilever meter which is a tester inclined at a predetermined angle in order to bend the fabric.

(i) Thickness

The thickness of the non-coated polyester fabric before the coating process was measured according to ASTM D 1777 (standard of the American Society for Testing and Materials).

(j) Scrub resistance

The scrub resistance of the fabric was evaluated using a scrub resistance tester according to ISO 5981 (standard of the International Standardization Organization), as shown in FIG. 2.

First, a coated fabric was cut to form a specimen, the fabric specimen was pressed in the scrub tester, and both sides of the specimen were repetitively scrubbed to perform the scrub test. The number of scrubbings of the

specimen before the stripping of the coating layer was measured.

In this regard, the scrub resistance of the fabric was evaluated by measuring the total number of reciprocations of a scrubber under a pressure force of 10 N. When a coating layer was not stripped after a scrubber reciprocates with respect to 50 strokes, it was indicated by "pass", thus continuing the reciprocation of the scrubber, and when the coating layer was stripped, it was indicated by "fail", thus stopping the reciprocation of the scrubber. The number of reciprocations of the scrubber at the time of the coating layer being stripped was measured.

When the number of reciprocations of the scrubber measured in this way was 600 or more, it was evaluated as "good", and when the number of reciprocations thereof was less than 600, it was evaluated as "poor".

[Table 4]

| | | Example 1 | Example 2 | Example 3 | Example 4 | Example 5 |
|---|---|---|---|---|---|---|
| Toughness of fabric (kJ/m$^3$) | | 3.90 | 4.02 | 4.12 | 5.76 | 5.95 |
| Edge comb resistance of fabric (25°C) | | 495 | 500 | 506 | 625 | 630 |
| Edge comb resistance of fabric (90°C) | | 472 | 478 | 481 | 605 | 610 |
| Cover factor of fabric | | 2081 | 2081 | 2081 | 2226 | 2226 |
| Contraction rate of fabric (%) | warp | 0.5 | 0.3 | 0.5 | 0.3 | 0.4 |
| | weft | 0.3 | 0.5 | 0.3 | 0.4 | 0.5 |
| Stiffness (kgf) | | 0.87 | 0.85 | 0.83 | 1.22 | 1.20 |
| Thickness (mm) | | 287 | 287 | 287 | 345 | 345 |
| Number of scrub (times) | | 2,000 | 2,000 | 2,000 | 2,000 | 2,000 |
| Evaluation of scrub resistance | | Good | Good | Good | Good | Good |

<u>Comparative Examples 1-5</u>

The polyester fabrics for an airbag of Comparative Examples 1-5 were manufactured in the same manner as in Examples 1-5, except for the conditions given in the following Table 5.

[Table 5]

| | Comparative Example 1 | Comparative Example 2 | Comparative Example 3 | Comparative Example 4 | Comparative Example 5 |
|---|---|---|---|---|---|
| PET content (mol%) | 100 | 100 | 100 | 100 | 100 |
| Intrinsic viscosity of yarn (dl/g) | 0.57 | 0.59 | 0.59 | 0.57 | 0.61 |
| Toughness of yarn (J/m$^3$) | 53 | 55 | 57 | 58 | 60 |
| Modulus of yarn (at 1% elongation, g/de) | 113 | 1113 | 114 | 122 | 125 |
| Modulus of yarn (at 2% elongation, g/de) | 95 | 96 | 97 | 97 | 98 |
| Tensile strength of yarn (g/de) | 6.6 | 6.7 | 6.9 | 6.8 | 7.3 |

(continued)

| | Comparative Example 1 | Comparative Example 2 | Comparative Example 3 | Comparative Example 4 | Comparative Example 5 |
|---|---|---|---|---|---|
| Breaking elongation of yarn (%) | 11.4 | 12.2 | 13.4 | 13.7 | 14.2 |
| Dry contraction rate (%) | 14.9 | 13.1 | 11.0 | 11.4 | 11.3 |
| Single yarn fineness (DPF) | 9.8 | 8.17 | 6.81 | 10.7 | 8.89 |
| Total fineness (de) | 490 | 490 | 490 | 640 | 640 |
| Number of filament | 50 | 60 | 72 | 60 | 72 |
| Weave density (warp×weft) | 47x47 | 47x47 | 47x47 | 44x44 | 44x44 |
| Weaving type | Plain weaving | Plain weaving | Plain weaving | Plain weaving | Plain weaving |
| Heat treatment/ Vulcanization temperature (°C) | 165 | 170 | 175 | 170 | 175 |
| Rubber component | Liquid silicone | Liquid silicone | Liquid silicone | Liquid silicone | Liquid silicone |
| Rubber coating weight ($g/m^2$) | 25 | 25 | 25 | 25 | 25 |

The polyester tear strength retention index (PTSRI) and polyester seam strength retention index (PSSRI) of the polyester fabrics manufactured in Comparative Examples 1-5 were measured after high-temperature heat treatment for a long time, and the results are given in the following Table 6.

[Table 6]

| | Comparative Example 1 | Comparative Example 2 | Comparative Example 3 | Comparative Example 4 | Comparative Example 5 |
|---|---|---|---|---|---|
| $PWTS^{wa}$(kgf) | 18.4 | 18.6 | 18.8 | 21.8 | 22.3 |
| $PWTS_{3000}^{wa}$ (kgf) | 12.9 | 13.6 | 14.1 | 15.9 | 16.7 |
| $PWTSRI^{wa}$ | 0.70 | 0.73 | 0.75 | 0.73 | 0.75 |
| $PWTS^{we}$(kgf) | 18.3 | 18.4 | 19.0 | 22.0 | 22.5 |
| $PWTS_{3000}^{we}$ (kgf) | 12.3 | 12.5 | 12.9 | 15.4 | 16.2 |
| $PWTSRI^{we}$ | 0.67 | 0.68 | 0.68 | 0.70 | 0.72 |
| $PWSS^{wa}$(N) | 510 | 510 | 512 | 653 | 660 |
| $PWSS_{3000}^{wa}$(N) | 347 | 347 | 358 | 470.2 | 495 |
| $PWSSRI^{wa}$ | 0.68 | 0.68 | 0.70 | 0.72 | 0.75 |
| $PWSS^{we}$(N) | 499 | 503 | 507 | 657 | 652 |
| $PWSS_{3000}^{we}$(N) | 329 | 342 | 349.8 | 479.6 | 489 |

(continued)

| | Comparative Example 1 | Comparative Example 2 | Comparative Example 3 | Comparative Example 4 | Comparative Example 5 |
|---|---|---|---|---|---|
| $PWSSRI^{we}$ | 0.66 | 0.68 | 0.69 | 0.73 | 0.75 |

Meanwhile, the tear strength and seam strength in the warp and weft directions of the polyester fabric of Comparative Example 5 that were measured before aging (room temperature, 25°C) and after heat-aging at a high temperature of 110°C for 3,000 hours are shown in FIGs. 7 and 8, respectively.

As shown in Table 6, the tear strength retention index in the warp direction ($PTSRI^{wa}$) and the tear strength retention index in the weft direction ($PTSRI^{we}$) of the polyester fabrics of Comparative Examples 1-5 that were measured after high-temperature heat treatment (50°C x 3,000 hours) were 0.70-0.75 and 0.67-0.72, respectively, and the seam strength retention index in the warp direction ($PSSRI^{wa}$) and the seam strength retention index in the weft direction ($PSSRI^{we}$) thereof were 0.68-0.75 and 0.66-0.75, respectively, which indicates the actual retention degrees of the physical properties of the airbag cushion because it is stored in an automobile under the climate condition of high temperature for a long time when no vehicle collision occurs. Consequently, it can be seen that the tear strength and the seam strength rapidly decreased.

Accordingly, there is a problem that the safety of a passenger in an automobile cannot be assured at the time of airbag deployment by an actual vehicle collision when the airbag cushion is left in the airbag module under the climate conditions of high temperature for a long period of time.

Further, polyester wet tearing strength retention index (PWTSRI) and polyester wet seam strength retention index (PWSSRI) of the polyester fabrics manufactured in Comparative Examples 1-5 were measured after heat treatment under the conditions of high-temperature and high-humidity for a long time, and the results are given in the following Table 7.

[Table 7]

| | Comparative Example 1 | Comparative Example 2 | Comparative Example 3 | Comparative Example 4 | Comparative Example 5 |
|---|---|---|---|---|---|
| $PWTS^{wa}$(kgf) | 18.5 | 18.8 | 19.0 | 21.3 | 22.0 |
| $PWTS_{3000}^{wa}$ (kgf) | 12.0 | 12.6 | 13.1 | 14.5 | 15.4 |
| $PWTSRI^{wa}$ | 0.65 | 0.67 | 0.69 | 0.68 | 0.70 |
| $PWTS^{we}$(kgf) | 18.1 | 18.5 | 18.6 | 20.8 | 21.5 |
| $PWTS_{3000}^{we}$ (kgf) | 11.6 | 12.4 | 12.3 | 14.0 | 15.3 |
| $PWTSRI^{we}$ | 0.64 | 0.67 | 0.66 | 0.67 | 0.71 |
| $PWSS^{wa}$(N) | 502 | 505 | 509 | 648 | 650 |
| $PWSS_{3000}^{wa}$(N) | 326 | 338 | 346 | 454 | 468 |
| $PWSSRI^{wa}$ | 0.65 | 0.67 | 0.68 | 0.70 | 0.72 |
| $PWSS^{we}$(N) | 495 | 500 | 505 | 654 | 649 |
| $PWSS_{3000}^{we}$(N) | 307 | 320 | 328 | 425 | 448 |
| $PWSSRI^{we}$ | 0.62 | 0.64 | 0.65 | 0.65 | 0.69 |

Meanwhile, the tear strength and seam strength in the warp and weft directions of the polyester fabric of Comparative Example 5 that were measured before aging (room temperature, 25°C) and after high-temperature wet-aging under the conditions of 65°C and 95% RH for 3,000 hours are shown in FIGs. 11 and 12, respectively.

As shown in Table 7, the tear strength retention index in the warp direction ($PWTSRI^{wa}$) and the tear strength retention index in the weft direction ($PWTSRI^{we}$) of the polyester fabrics of Comparative Examples 1-5 that were measured after heat treatment under high-temperature and high-humidity conditions (65°C x 95% RH) for 3,000 hours were 0.65-0.70 and 0.64-0.71, respectively, and the seam strength retention index in the warp direction ($PWSSRI^{wa}$) and the seam strength retention index in the weft direction ($PWSSRI^{we}$) thereof were 0.65-0.72 and 0.62-0.69, respectively, which

indicates the actual retention degrees of the physical properties of the airbag cushion because it is stored in an automobile under the climate condition of high temperature for a long time when no vehicle collision occurs. Accordingly, there is a problem that the safety of a passenger in an automobile cannot be assured at the time of airbag deployment by an actual vehicle collision when the airbag cushion is left in the airbag module under the climate conditions of high temperature for a long period of time.

Further, various physical properties of the polyester fabrics manufactured in Comparative Examples 1-5 are summarized in the following Table 8.

[Table 8]

| | | Comparative Example 1 | Comparative Example 2 | Comparative Example 3 | Comparative Example 4 | Comparative Example 5 |
|---|---|---|---|---|---|---|
| Toughness of yarn ($kJ/m^3$) | | 2.1 | 2.12 | 2.20 | 2.5 | 2.7 |
| Edge comb resistance of yarn (25°C) | | 215 | 220 | 220 | 245 | 250 |
| Edge comb resistance of yarn (90°C) | | 198 | 198 | 202 | 225 | 230 |
| Cover factor of yarn | | 2057 | 2057 | 2057 | 2,141 | 2,141 |
| Contraction rate of yarn (%) | warp | 1.3 | 1.3 | 1.4 | 1.2 | 1.4 |
| | weft | 1.2 | 1.2 | 1.1 | 1.0 | 1.0 |
| Stiffness (kgf) | | 2.05 | 2.05 | 2.04 | 2.66 | 2.65 |
| Thickness (mm) | | 287 | 287 | 287 | 345 | 345 |
| Number of scrub (times) | | 30 | 30 | 30 | 30 | 30 |
| Evaluation of scrub resistance | | Poor | Poor | Poor | Poor | Poor |

As shown in Tables 1-4, the polyester fabrics of Examples 1-5 that were manufactured by using a high-strength, high-elongation, low-modulus polyester yarn of the present invention to optimize the tear strength and the seam strength index had the toughness of 3.90 to 5.95 $kJ/m^3$ and thus showed excellent mechanical properties sufficient to endure high-temperature and highpressure inflator gas at the time of airbag deployment. Further, it can be seen that the fabrics showed very excellent contraction rate in the warp and weft directions of 0.3% to 0.5% and 0.3% to 0.5%, respectively. At the same time, the polyester fabrics of Examples 1-5 had excellent stiffness in the optimum range from 0.63 to 1.22 kgf, indicating that they are excellent in the shape stability, foldability, and storability.

In particular, because the polyester fabrics of Examples 1-5 were manufactured by using the high-strength and high-elongation, and low-modulus yarn, they had the excellent cover factor of 2,081 to 2,226 and the excellent edge comb resistance at 25°C and 90°C of 495 N to 630 N and 472 N to 610 N, thereby greatly improving a phenomenon of the outer seams of an airbag cushion being tensioned at the time of airbag cushion deployment, and airtightness and energy absorbing performance of the cushion.

In contrast, as shown in Tables 5-8, the polyester fabrics of Comparative Examples 1-5 that were manufactured by using the low-viscosity polyester yarn for industrial use do not satisfy these characteristics. Particularly, the polyester fabrics of Comparative Examples 1-5 showed very low toughness of 2.1 to 2.7 $kJ/m^3$, and very low contraction rate in the warp and weft directions of 1.2% to 1.4% and 1.0% to 1.2%, respectively. When these fabrics having very poor mechanical properties are used in an airbag, an airbag is ruptured when it is deployed, causing problems due to deterioration in mechanical properties.

Further, the fabrics of Comparative Examples 1-5 showed the cover factors similar to those of Examples 1-5, but had very low edge comb resistance at 25°C and 90°C of 215 N to 250 N and 198 N to 230 N, respectively. Thus, a phenomenon of the outer seams of an airbag cushion being tensioned at the time of airbag cushion deployment occurs, causing a problem in the safety of a passenger.

<u>Experimental Example 1</u>

Airbag cushions were manufactured using the non-coated polyester fabrics that were not subjected to the

coating process in Examples 1-5 and Comparative Examples 1-5, and the coated polyester fabrics subjected to the coating process, and then DAB (driver airbag) cushion assembly and PAB (passenger airbag) cushion assembly were manufactured as an airbag for an automobile, as shown in the following Table 9, respectively. Static tests of the airbags for automobile thus manufactured were carried out under three heat treatment conditions (room temperature: 25°C x 4 hr, left in oven, Hot: 85°C x 4 hr, left in oven, Cold: -30°C x 4 hr, left in oven).

As the results of the static tests, when the fabric is not torn, pinholes are not formed and the fabric is not carbonized, it is evaluated as "Pass", and when at least one of the fabric being torn, pinholes being formed and the fabric being carbonized occurs, it was evaluated as "Fail". Here, when the result of the static test is "Pass", it can be used as the airbag cushion. However, when the result of the static test is "Fail", it cannot be used as the airbag cushion.

The results of static tests of the airbag cushions manufactured by using the non-coated polyester fabrics of Examples 1-5 and Comparative Examples 1-5 are given in the following Table 9.

[Table 9]

| | Spec of cushion | Gunpowder inflator pressure (kPa) | Gunpowder inflator pressure temperature (°C) | Static test at room temperature (Static) | Hot static test (Static) | Cold static test (Static) |
|---|---|---|---|---|---|---|
| Example 1 | DAB | 185 | 430 | Pass | Pass | Pass |
| Example 2 | DAB | 185 | 430 | Pass | Pass | Pass |
| Example 3 | DAB | 185 | 430 | Pass | Pass | Pass |
| Example 4 | PAB | 320 | 615 | Pass | Pass | Pass |
| Example 5 | PAB | 320 | 615 | Pass | Pass | Pass |
| Comparative Example 1 | DAB | 185 | 430 | Fail | Fail | Fail |
| Comparative Example 2 | DAB | 185 | 430 | Fail | Fail | Fail |
| Comparative Example 3 | DAB | 185 | 430 | Fail | Fail | Fail |
| Comparative Example 4 | PAB | 320 | 615 | Fail | Fail | Fail |
| Comparative Example 5 | PAB | 320 | 615 | Fail | Fail | Fail |

Experimental Example 2

With respect to the airbag cushions manufactured by using the non-coated polyester fabrics of Examples 1-5 that were evaluated as "Pass" in the static test of Experimental Example 1, an upper limit test was further performed.

The upper limit test was performed using frontal airbags in the same manner as in Experimental Example 1, except for varying the specifications of cushion assembly and the inflator pressure, as shown in the following Table 10. The evaluation results are given in the following Table 10.

[Table 10]

| | Spec of cushion | Gunpowder inflator pressure (kPa) | Gunpowder inflator pressure temperature (°C) | Static test at room temperature (Upper Limit) | Hot static test (Upper Limit) | Cold static test (Upper Limit) |
|---|---|---|---|---|---|---|
| Example 1 | DAB | 245 | 550 | Pass | Pass | Pass |
| Example 2 | DAB | 245 | 550 | Pass | Pass | Pass |

(continued)

| | Spec of cushion | Gunpowder inflator pressure (kPa) | Gunpowder inflator pressure temperature (°C) | Static test at room temperature (Upper Limit) | Hot static test (Upper Limit) | Cold static test (Upper Limit) |
|---|---|---|---|---|---|---|
| Example 3 | DAB | 245 | 550 | Pass | Pass | Pass |
| Example 4 | PAB | 380 | 740 | Pass | Pass | Pass |
| Example 5 | PAB | 380 | 740 | Pass | Pass | Pass |

As shown in Tables 9 and 10, as the results of static tests and upper limit tests of the airbags for automobiles, including the polyester fabrics of Examples 1-5 that were manufactured using the polyester yarns of present invention having a specific fineness whose the tear strength and seam strength ranges were optimized, in which the static tests were carried out after each of the airbags had been left in an oven under three heat treatment conditions, it can be seen that all of the airbags have excellent performance as airbags for automobiles because their fabrics were not torn, pinholes were not formed, and their fabrics were not carbonized.

Here, the static test is the most basic airbag deployment test for evaluating the designed airbag cushion at an initial stage, in which the airbag cushion mounted in a module is only evaluated, and the evaluation is carried out under the normal inflator temperature and deployment pressure. When the static test is normally completed, the upper limit test is subsequently carried out. Because the upper limit test is carried out under the highest inflator temperature and deployment pressure, that is, under the most severe conditions (high temperature and high pressure), many of them fail to satisfy the performance in this test. When evaluated as "Pass" in both static test and upper limit test, they can be applied as the airbag cushion.

In contrast, from the static test results of the airbags for automobiles including the polyester fabrics of Comparative Examples 1-5, it can be seen that all of the airbag cushions were evaluated as "Fail" because the fabrics were torn at the time of airbag deployment, the fabrics were ruptured due to friction and pinhole formation, and the fabrics were carbonized. Therefore, it can be evaluated that the airbags for automobiles including the polyester fabrics of Comparative Examples 1-5 cannot be practically used as airbags, prior to the upper limit test. Particularly, in the static tests of the DAB (driver airbag) cushion assemblies including the fabrics of Comparative Examples 1, 2 and 3, the fabric in the outer seam and tether of each of the cushions was torn. In the cases of Comparative Examples 4 and 5, the fabric in the inlet of an inflator was torn, and the outer seams were also tensioned.

Further, from the static test results of the airbags for automobiles including the fabrics of Comparative Examples 1-5, it can be seen that tearing of the fabrics is generally caused by low physical properties of the polyester yarn and the fabric itself, and attributed to pinhole formation, a lack of scrub resistance, and carbonized fabric. Therefore, when the fabrics for an airbag of Comparative Examples 1-5 are practically applied to airbag cushions for an automobile, airbags are ruptured, thereby severely deteriorating the functions of the airbags. Furthermore, because the fabrics did not satisfy the performances as the airbag cushion after heat treatment at room temperature, a high temperature, and a low temperature for a short time, the safety of a passenger cannot be assured at the time of a vehicle collision while the airbag cushions is stored at a high temperature for a long period of time.

## Claims

**1.** A polyester fabric, comprising a polyester yarn having a fineness of 300 to 700 denier, and having 0.8 or more of a $PTSRI^{wa}$ index in the warp direction of the fabric as shown in the following Equation 1, 0.8 or more of a $PTSRI^{we}$ index in the weft direction of the fabric as shown in the following Equation 2, 0.8 or more of a $PSSRI^{wa}$ index in the warp direction of the fabric as shown in the following Equation 3, and 0.8 or more of a $PSSRI^{we}$ index in the weft direction of the fabric as shown in the following Equation 4:

[Equation 1]

$$PTSRI^{wa} = PTS_{3000}{}^{wa}/PTS^{wa}$$

[Equation 2]

$$PTSRI^{we} = PTS_{3000}{}^{we}/PTS^{we}$$

[Equation 3]

$$PSSRI^{wa} = PSS_{3000}{}^{wa}/PSS^{wa}$$

[Equation 4]

$$PSSRI^{we} = PSS_{3000}{}^{we}/PSS^{we}$$

wherein $PTSRI^{wa}$ and $PTSRI^{we}$ represent a polyester tearing strength retention index (PTSRI) in the warp and weft directions of the fabric, which is measured after heat treatment at 110°C for 3,000 hours in accordance with Autoliv's test standard E668992 for a fabric for an airbag, respectively,
$PSSRI^{wa}$ and $PSSR^{we}$ represent a polyester seam strength retention index (PSSRI) in the warp and weft directions of the fabric, which is measured after heat treatment at 110°C for 3,000 hours in accordance with Autoliv's test standard E668992 for a fabric for an airbag, respectively,
$PTS^{wa}$ and $PTS^{we}$ represent a polyester tear strength (kgf) in the warp and weft directions of the fabric, which is measured at room temperature in accordance with Autoliv's test standard E668992 for a fabric for an airbag, respectively,
$PTS_{3000}{}^{wa}$ and $PTS_{3000}{}^{we}$ represent a polyester tear strength (kgf) in the warp and weft directions of the fabric, which is measured after heat treatment at 110°C for 3,000 hours in accordance with Autoliv's test standard E668992 for a fabric for an airbag, respectively,
$PSS^{wa}$ and $PSS^{we}$ represent a polyester seam strength (N) in the warp and weft directions of the fabric, which is measured at room temperature in accordance with Autoliv's test standard E668992 for a fabric for an airbag, respectively, and
$PSS_{3000}{}^{wa}$ and $PSS_{3000}{}^{we}$ represent a polyester seam strength (N) in the warp and weft directions of the fabric, which is measured after heat treatment at 110°C for 3,000 hours in accordance with Autoliv's test standard E668992 for a fabric for an airbag, respectively.

**2.** The polyester fabric according to Claim 1, wherein the fabric has the tear strength, $PTS^{wa}$, $PTS^{we}$, $PTS_{3000}{}^{wa}$, and $PTS_{3000}{}^{we}$ of 20 kgf or more, and the seam strength, $PSS^{wa}$, $PSS^{we}$, $PSS_{3000}{}^{wa}$, and $PSS_{3000}{}^{we}$ of 670 N or more.

**3.** The polyester fabric according to Claim 1, comprising a polyester yarn having a fineness of 300 to 700 denier, and having 0.83 or more of a $PWTSRI^{wa}$ index in the warp direction of the fabric as shown in the following Equation 5, 0.83 or more of a $PWTSRI^{we}$ index in the weft direction of the fabric as shown in the following Equation 6, 0.83 or more of a $PWSSRI^{wa}$ index in the warp direction of the fabric as shown in the following Equation 7, and 0.83 or more of a $PWSSRI^{we}$ index in the weft direction of the fabric as shown in the following Equation 8:

[Equation 5]

$$PWTSRI^{wa} = PWTS_{3000}{}^{wa}/PWTS^{wa}$$

[Equation 6]

$$PWTSRI^{we} = PWTS_{3000}{}^{we}/PWTS^{we}$$

[Equation 7]

$$PWSSRI^{wa} = PWSS_{3000}{}^{wa}/PWSS^{wa}$$

[Equation 8]

$$PWSSRI^{we} = PWSS_{3000}^{we}/PWSS^{we}$$

wherein $PWTSRI^{wa}$ and $PWTSRI^{we}$ represent a polyester tearing strength retention index (PWTSRI) in the warp and weft directions of the fabric, which is measured after heat treatment under the conditions of 65°C and 95% RH for 3,000 hours in accordance with Autoliv's test standard E668992 for a fabric for an airbag, respectively,
$PWSSRI^{wa}$ and $PWSSRI^{we}$ represent a polyester seam strength retention index (PWSSRI) in the warp and weft directions of the fabric, which is measured after heat treatment under the conditions of 65°C and 95% RH for 3,000 hours in accordance with Autoliv's test standard E668992 for a fabric for an airbag, respectively,
$PWTS^{wa}$ and $PWTS^{we}$ represent a polyester tear strength (kgf) in the warp and weft directions of the fabric, which is measured at room temperature in accordance with Autoliv's test standard E668992 for a fabric for an airbag, respectively,
$PWTS_{3000}^{wa}$ and $PWTS_{3000}^{we}$ represent a polyester tear strength (kgf) in the warp and weft directions of the fabric, which is measured after heat treatment under the conditions of 65°C and 95% RH for 3,000 hours in accordance with Autoliv's test standard E668992 for a fabric for an airbag, respectively,
$PWSS^{wa}$ and $PWSS^{we}$ represent a polyester seam strength (N) in the warp and weft directions of the fabric, which is measured at room temperature in accordance with Autoliv's test standard E668992 for a fabric for an airbag, respectively, and
$PWSS_{3000}^{wa}$ and $PWSS_{3000}^{we}$ represent a polyester seam strength (N) in the warp and weft directions of the fabric, which is measured after heat treatment under the conditions of 65°C and 95% RH for 3,000 hours in accordance with Autoliv's test standard E668992 for a fabric for an airbag, respectively.

4. The polyester fabric according to Claim 3, wherein the fabric has the tear strength, $PWTS^{wa}$, $PWTS^{we}$, $PWTS_{3000}^{wa}$, and $PWTS_{3000}^{we}$ of 20 kgf or more, and the seam strength, $pWSS^{wa}$, $PWSS^{we}$, $PWSS_{3000}^{wa}$ , and $PWSS_{3000}^{we}$ of 670 N or more.

5. The polyester fabric according to claim 1, wherein the polyester fabric has a toughness of 3.2 kJ/$m^3$ or more, which is defined as the following Equation 9:

[Equation 9]

$$\text{Toughness (work of rupture)} = \int_0^{strain} F \cdot dl$$

wherein F indicates a load applied when a length of the polyester fabric increases by dl.

6. The polyester fabric according to Claim 1, wherein the polyester fabric has a stiffness of 2.0 kgf or less, which is measured by the method according to the ASTM D 4032 (standard of the American Society for Testing and Materials).

7. The polyester fabric according to claim 1, wherein the polyester fabric has an edge comb resistance of 300 N or more and an edge comb resistance of 280 N or more, which are measured by the method according to the ASTM D 6479 (standard of the American Society for Testing and Materials) at room temperature and at 90°C, respectively.

8. The polyester fabric according to Claim 1, comprising a polyester yarn having a tensile strength of 8.5 g/d to 11.0 g/d and a breaking elongation of 15% to 30%, which are measured at room temperature.

9. The polyester fabric according to Claim 1, comprising a polyester yarn having a Young's modulus of 60 to 110 g/de at 1% elongation and 50 to 87 g/de at 2% elongation, which are measured by the method according to the ASTM D 885 (standard of the American Society for Testing and Materials) at room temperature.

10. The polyester fabric according to Claim 1, wherein the polyester fabric has a cover factor (CF) of 1,800 to 2,460, which is defined as the following Equation 10:

[Equation 10]

Cover factor (CF)

$$= \text{warp density(strand/inch)} \times \sqrt{(\text{warp denier})} + \text{weft density(strand/inch)} \times \sqrt{(\text{weft denier})}$$

**11.** The polyester fabric according to Claim 1, wherein the polyester fabric is coated with one or more rubber components selected from the group consisting of powdered silicone, liquid silicone, polyurethane, chloroprene, neoprene rubber, and emulsified silicone resin.

**12.** The polyester fabric according to Claim 11, wherein a coating amount of the rubber component per unit area is 20 to 200 $g/m^2$.

**13.** A method of manufacturing the polyester fabric according to any one of Claims 1 to 12, comprising the steps of:

weaving a polyester yarn having a fineness from 300 to 700 denier to form a grey cloth for an airbag;
scouring the woven grey cloth for an airbag; and
tentering the scoured grey cloth.

**14.** The method according to Claim 13, wherein heat treatment temperature is 140 to 210°C in the tentering step.

**15.** An airbag for an automobile, comprising the polyester fabric according to any one of Claims 1 to 12.

**16.** The airbag for an automobile according to Claim 15, wherein the airbag is a frontal airbag or a side curtain airbag.

[FIG. 1]

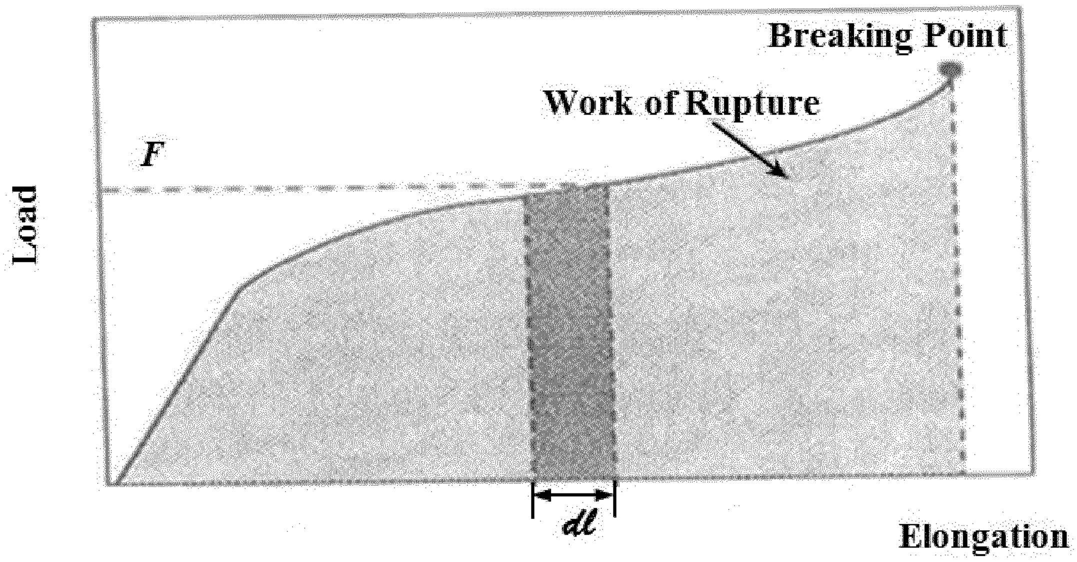
Breaking Point
Work of Rupture
F
Load
dl
Elongation

[FIG. 2]

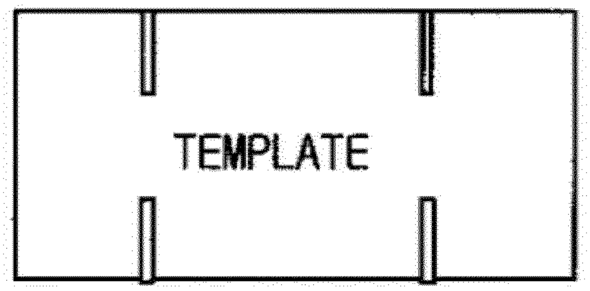
TEMPLATE

[FIG. 3]

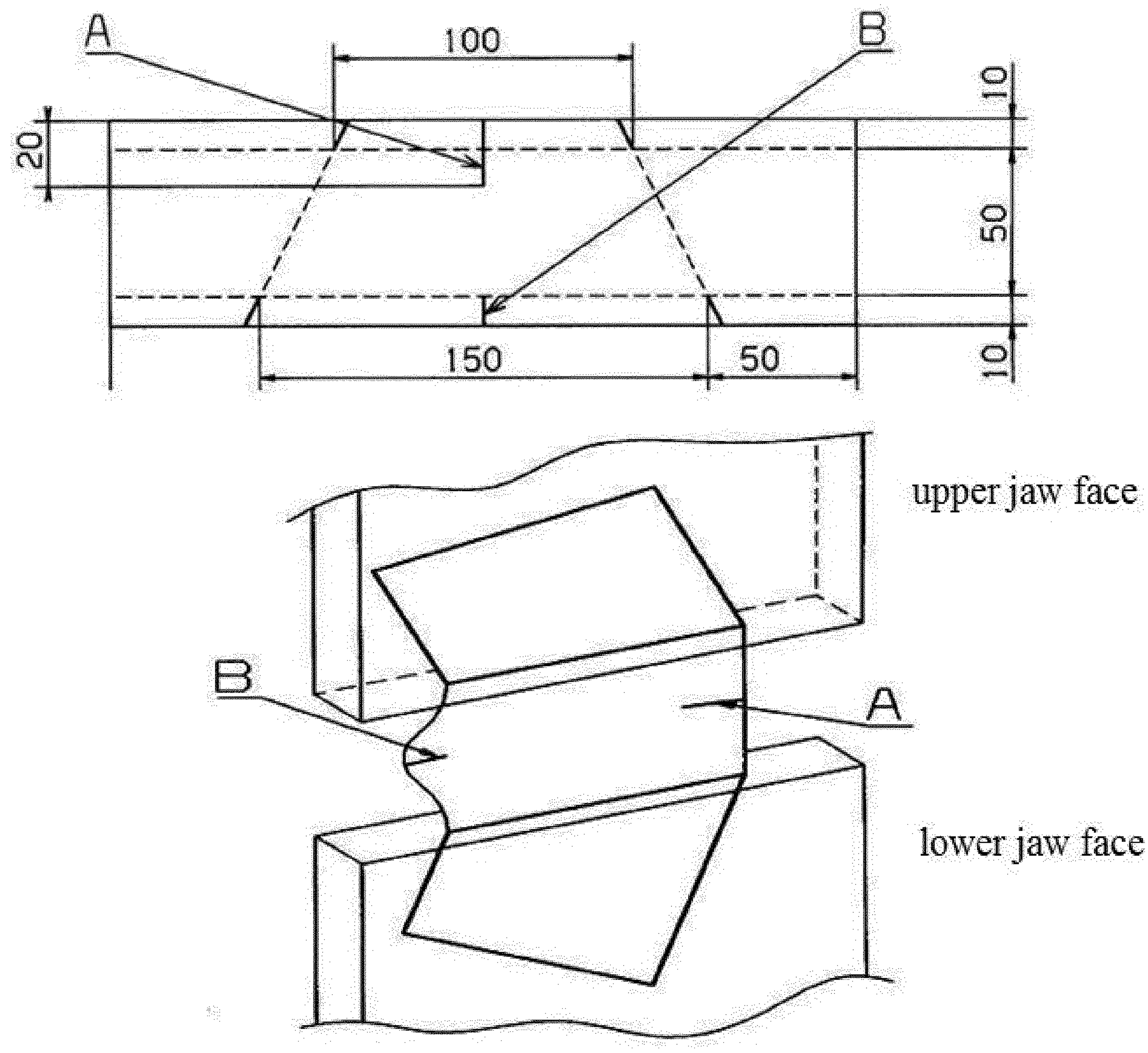

[FIG. 4]

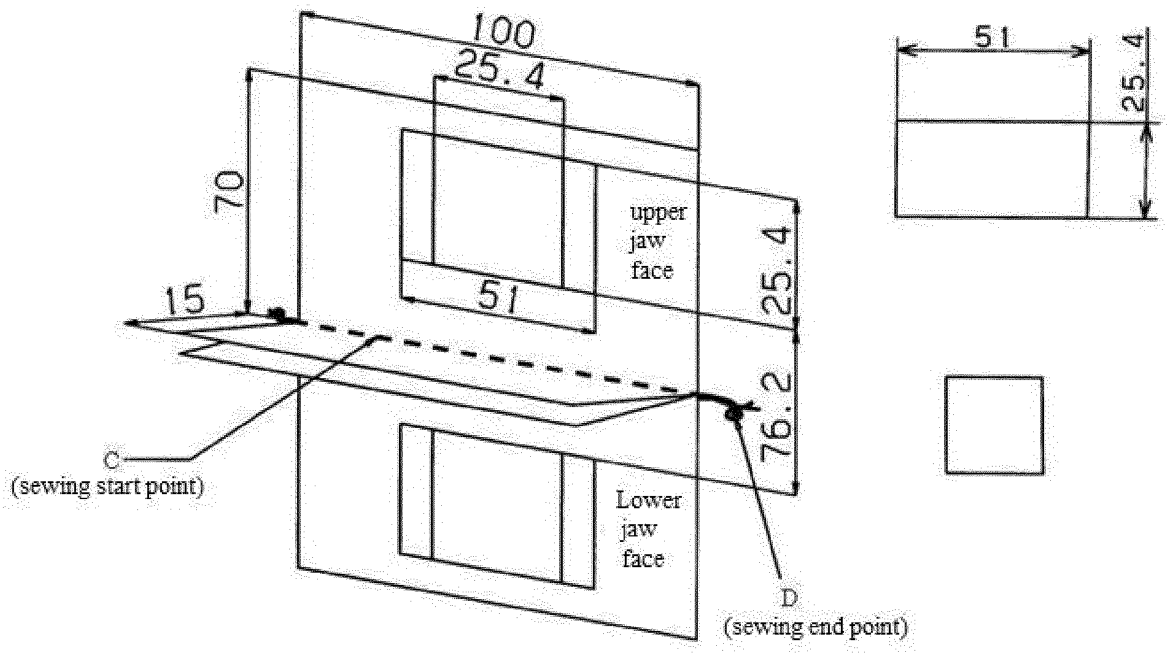
100
25.4
70
upper
jaw
face
25.4
51
15
76.2
C
(sewing start point)
Lower
jaw
face
D
(sewing end point)
51
25.4

[FIG. 5]

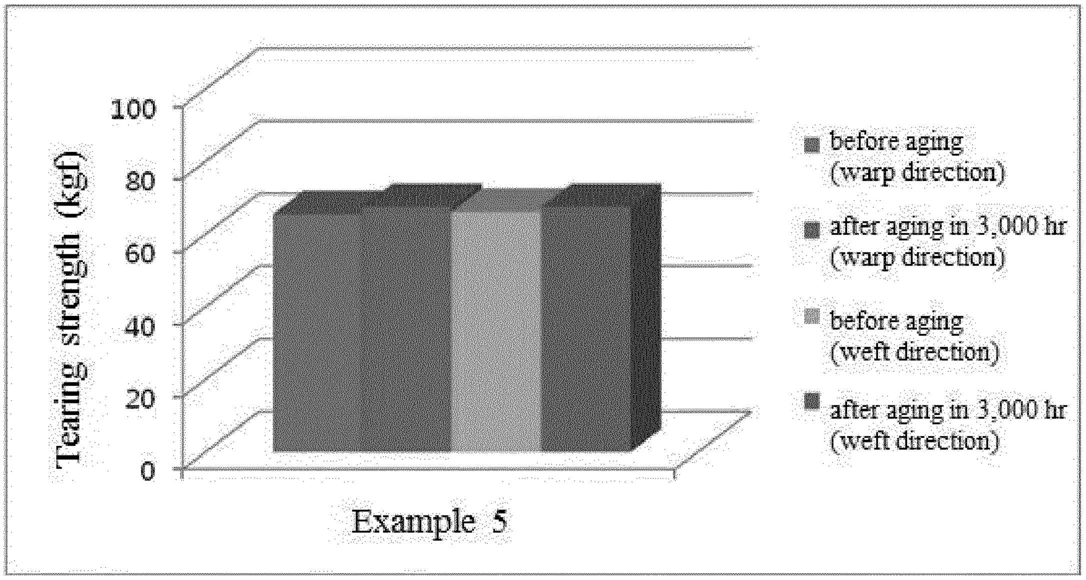
100
80
60
40
20
0
Tearing strength (kgf)
Example 5
before aging (warp direction)
after aging in 3,000 hr (warp direction)
before aging (weft direction)
after aging in 3,000 hr (weft direction)

[FIG. 6]

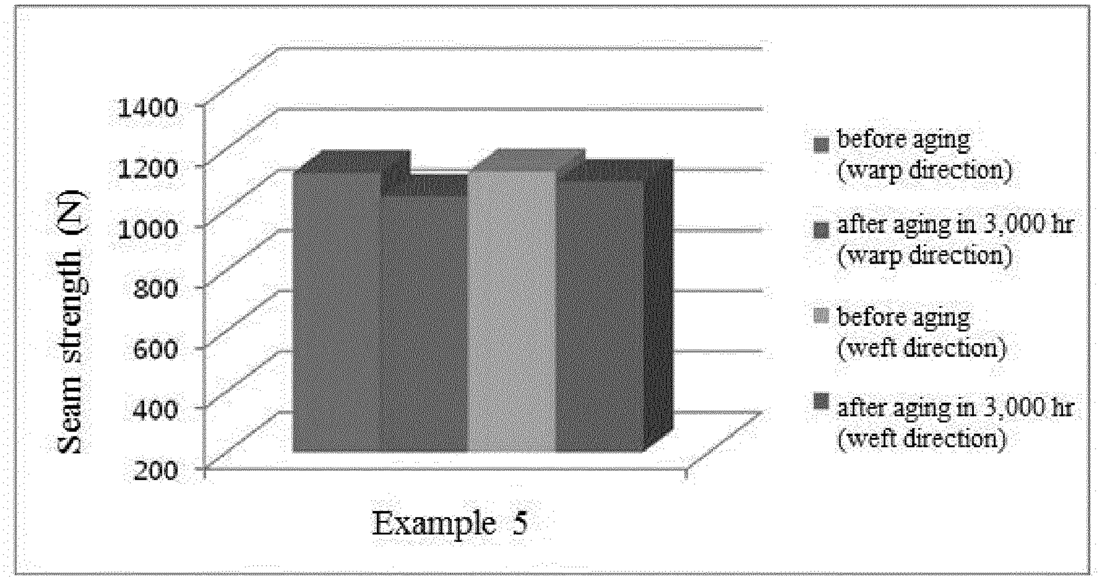
1400
1200
1000
800
600
400
200
Seam strength (N)
Example 5
before aging (warp direction)
after aging in 3,000 hr (warp direction)
before aging (weft direction)
after aging in 3,000 hr (weft direction)

[FIG. 7]

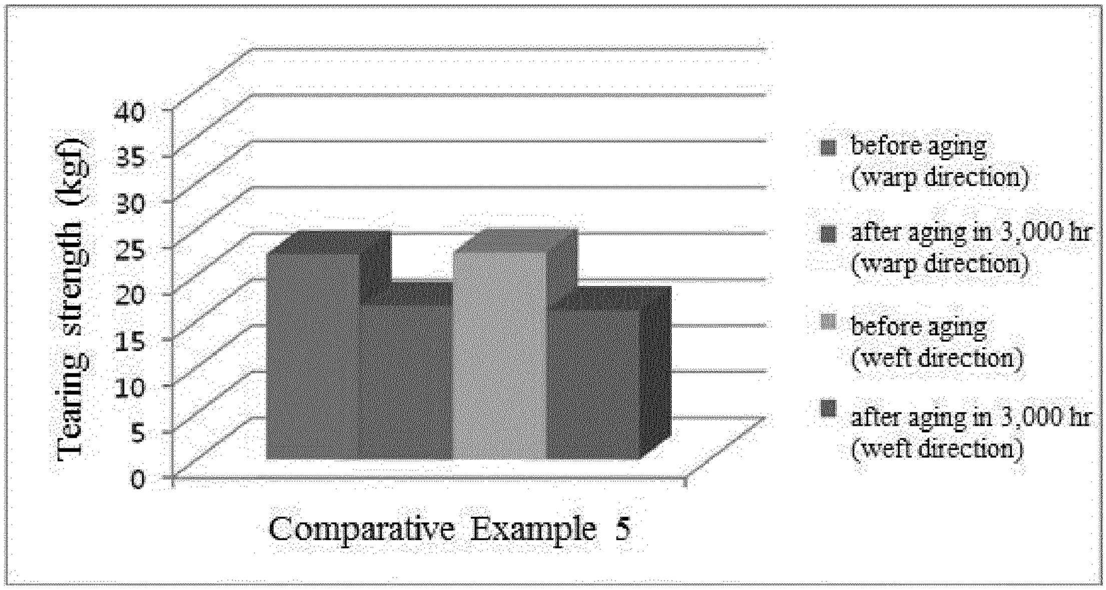
Tearing strength (kgf)
40
35
30
25
20
15
10
5
0
Comparative Example 5
before aging (warp direction)
after aging in 3,000 hr (warp direction)
before aging (weft direction)
after aging in 3,000 hr (weft direction)

[FIG. 8]

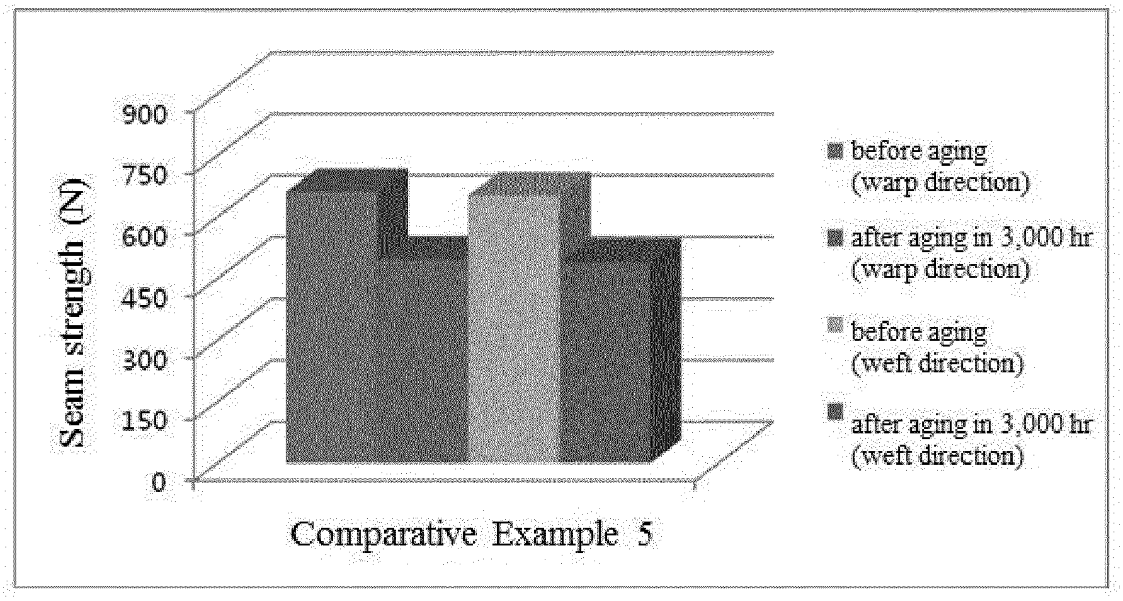
Seam strength (N)
900
750
600
450
300
150
0
Comparative Example 5
before aging (warp direction)
after aging in 3,000 hr (warp direction)
before aging (weft direction)
after aging in 3,000 hr (weft direction)

[FIG. 9]

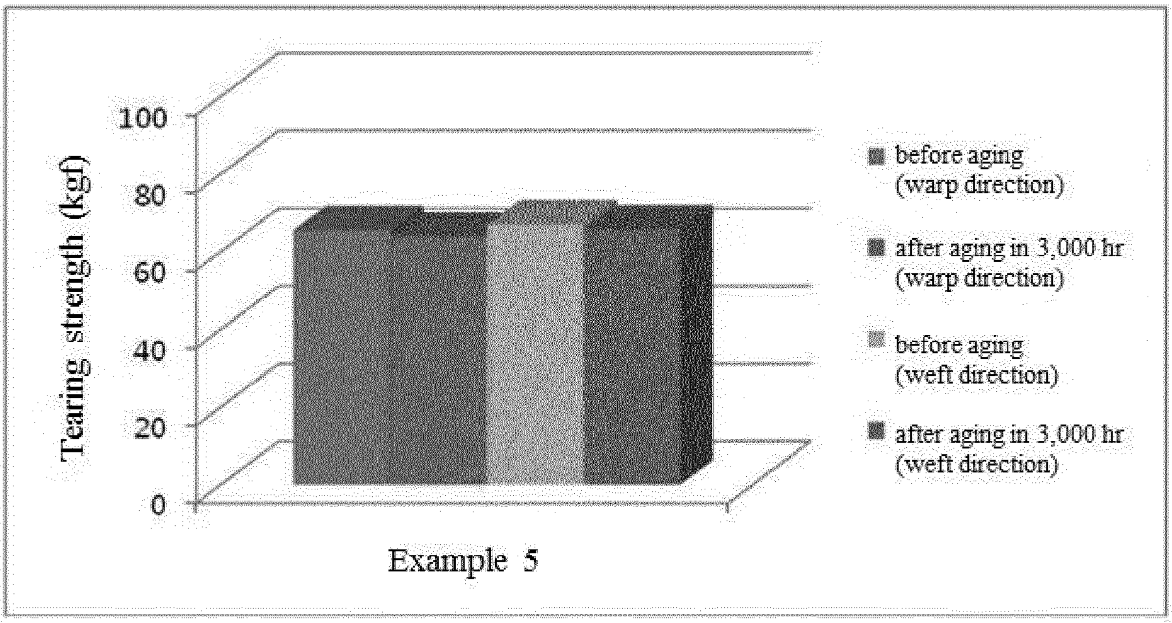
100
80
60
40
20
0
Tearing strength (kgf)
Example 5
before aging (warp direction)
after aging in 3,000 hr (warp direction)
before aging (weft direction)
after aging in 3,000 hr (weft direction)

[FIG. 10]

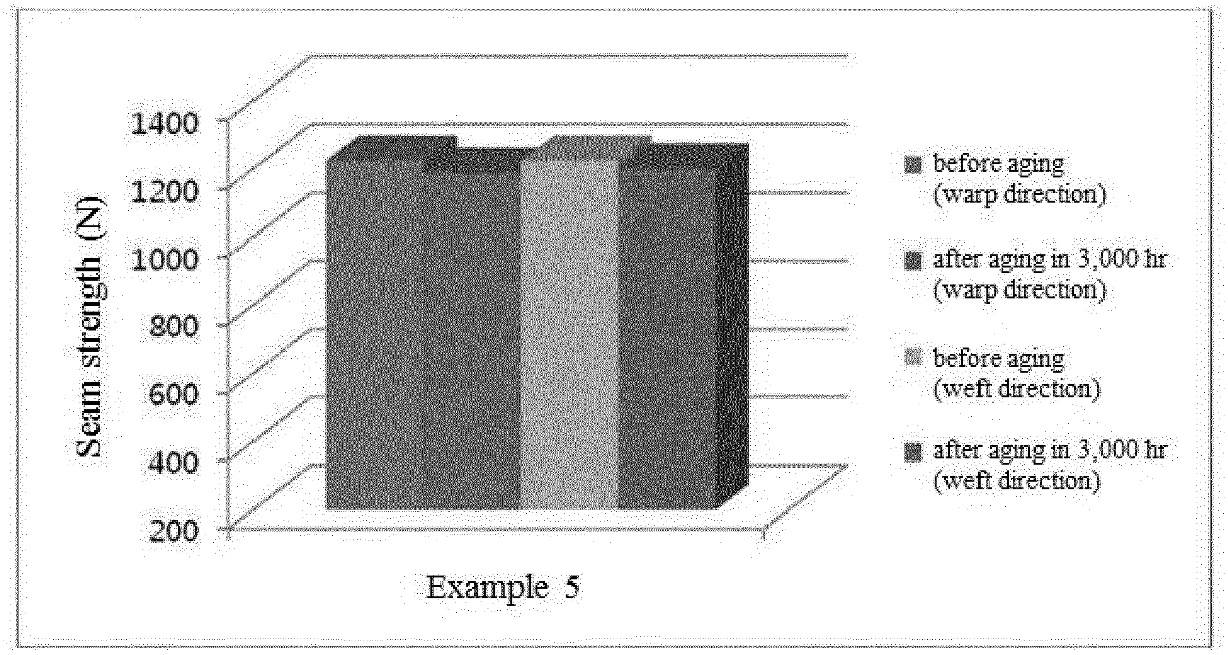
1400
1200
1000
800
600
400
200
Seam strength (N)
Example 5
before aging (warp direction)
after aging in 3,000 hr (warp direction)
before aging (weft direction)
after aging in 3,000 hr (weft direction)

[FIG. 11]

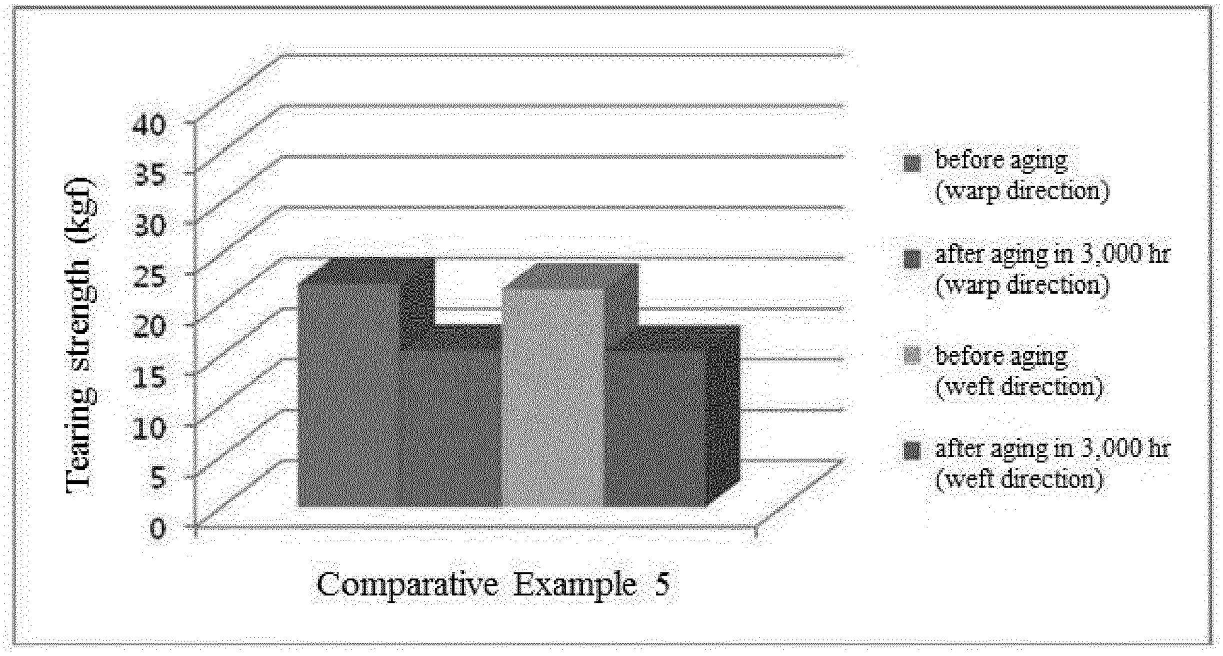
40
35
30
25
20
15
10
5
0
Tearing strength (kgf)
before aging (warp direction)
after aging in 3,000 hr (warp direction)
before aging (weft direction)
after aging in 3,000 hr (weft direction)
Comparative Example 5

[FIG. 12]

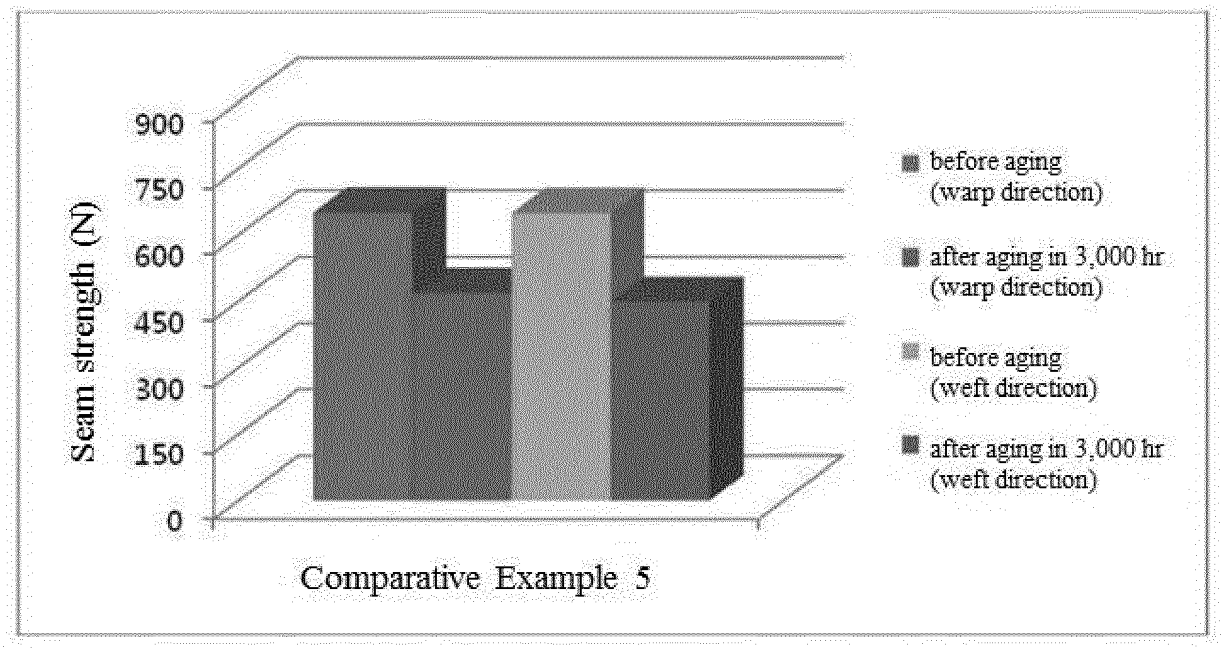
900
750
600
450
300
150
0
Seam strength (N)
before aging (warp direction)
after aging in 3,000 hr (warp direction)
before aging (weft direction)
after aging in 3,000 hr (weft direction)
Comparative Example 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI04214437 B